# EUROPEAN PATENT SPECIFICATION

(11) **EP 2 413 399 B1**
(45) Date of publication and mention of the grant of the patent: **20.03.2013**
(21) Application number: 11173780.5
(22) Date of filing: 13.07.2011
(51) Int. Cl.: H01M 2/26, H01M 2/22

(54) **Prismatic sealed secondary battery and manufacturing method for the same**
Versiegelte prismatische Sekundärbatterie und Herstellungsverfahren dafür
Batterie secondaire scellée prismatique et son procédé de fabrication

(30) Priority: 14.07.2010 JP 2010160068; 29.07.2010 JP 2010170551; 31.01.2011 JP 2011019078
(43) Date of publication of application: 01.02.2012
(73) Proprietor: SANYO ELECTRIC CO., LTD., Moriguchi-shi, Osaka 570-8677 (JP)
(72) Inventor: Hattori, Takayuki, Moriguchi-shi, Osaka 570-8677 (JP); Kimura, Takenori, Moriguchi-shi, Osaka 570-8677 (JP); Yamauchi, Yasuhiro, Moriguchi-shi, Osaka 570-8677 (JP); Nohma, Toshiyuki, Moriguchi-shi, Osaka 570-8677 (JP)
(74) Representative: Glawe, Delfs, Moll

(56) References cited:
- JP-A- 2003 249 423
- JP-A- 2005 216 825
- US-A1- 2009 004 561
- US-A1- 2009 104 525

## Description

### TECHNICAL FIELD

The present invention relates to a prismatic sealed secondary battery and a method for manufacturing such battery. More particularly, the invention relates to a sealed battery that has stacked positive electrode substrate exposed portions and negative electrode substrate exposed portions, in which at least one of those sets of substrate exposed portions is split into two groups, a plurality of connecting conductive members are stably positioned and disposed between such two groups, and the substrate exposed portions are resistance-welded to collector members and to the connecting conductive members, so that lowered resistance of the welds is realized and variation in the welding strength is curbed.

### BACKGROUND ART

With the rise of the environmental protection movement over recent years, restrictions on emissions of carbon dioxide and other exhaust gases that cause warming have been strengthened. Consequently, the automobile industry is engaging actively in development of electric vehicles (EVs), hybrid electric vehicles (EVs) and the like, to replace vehicles that use fossil fuels such as gasoline, diesel oil and natural gas. As the batteries for such EVs and EVs, nickel-hydrogen secondary batteries or lithium ion secondary batteries are used. In recent years, nonaqueous electrolyte secondary batteries such as lithium ion secondary batteries have come to be used in large numbers for this purpose, because they provide a battery that is both lightweight and high-capacity.

EVs and HEVs are now required not only to be environment-friendly, but also to have basic performance as vehicles, that is, acceleration performance, gradient-climbing performance, and other high-level driving capabilities. In order to satisfy such requirements, batteries are needed that have not simply an enhanced battery capacity but also high output. The secondary batteries widely used for EVs and HEVs usually are prismatic sealed secondary batteries in which a generation element is housed inside a prismatic outer can, and the internal resistance of such batteries must be reduced to the extent possible, because large current flows in them when high-output discharge is performed. For this reason, various improvements have been undertaken concerning lowering the internal resistance by preventing welding faults between the electrode plate substrates and the collector members in the generation element of the battery.

There exist the methods of mechanical caulking, welding, and so forth, for electrically joining the electrode plate substrates and the collector members so as to effect electrical collection in the generation element. For electrical collection in batteries that are required to have high output, welding is the appropriate method, since it is likely to realize lower resistance and unlikely to deteriorate over time. In lithium ion secondary batteries, aluminum or aluminum alloy is used as the material for the positive electrode plate substrates and collector members, and copper or copper alloy as the material for the negative electrode plate substrates and collector members to realize lower resistance. However, aluminum, aluminum alloy, copper, and copper alloy have the characteristics of low electrical resistance and high thermal conductivity, so that an extremely large amount of energy is required in order to weld them.

The following methods have long been known as methods for welding together the electrode plate substrates and collector members that constitute the generation element:
1) Laser welding
2) Ultrasonic welding
3) Resistance welding

The above three welding methods each have their merits and drawbacks. However, in the interest of productivity and economy, it is preferable to employ resistance welding, which has long been widely used as a method for welding between metals. However, the electrode assemblies in the lithium ion secondary batteries or other prismatic sealed secondary batteries used in EVs and HEVs have a structure in which positive electrode plates and negative electrode plates are stacked or wound with separators interposed therebetween. Furthermore, the substrate exposed portions of the positive electrode plates and negative electrode plates are disposed so as to be located on differing sides to each other, with the stacked positive electrode plate substrate exposed portions being welded to the positive electrode collector member, and likewise with the stacked negative electrode plate substrate exposed portions being welded to the negative electrode collector member. Where the capacity of a lithium ion secondary battery or other prismatic sealed secondary battery used for an EV or HEV is large, the number of these stacked positive electrode plate substrate exposed portions and negative electrode plate substrate exposed portions will be extremely large.

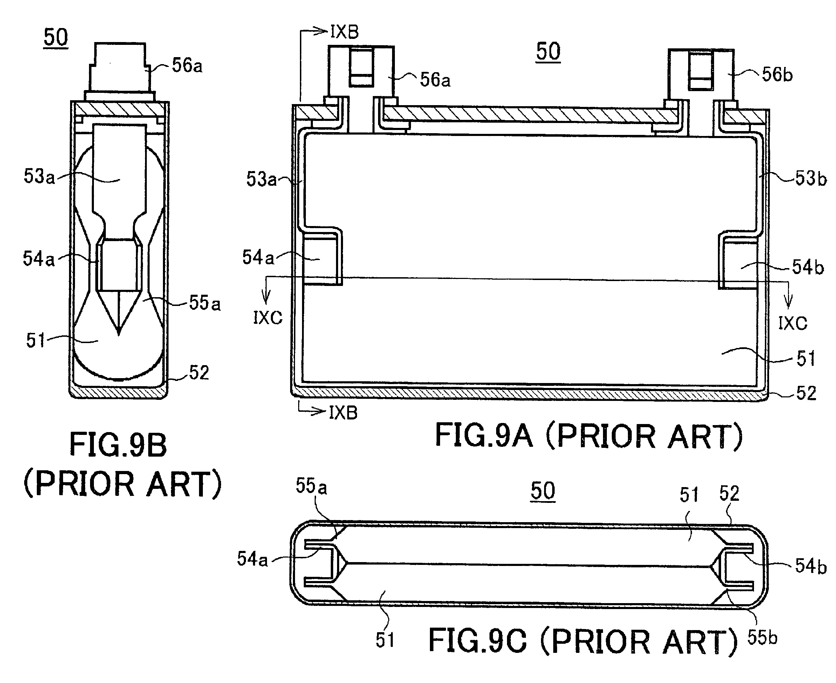

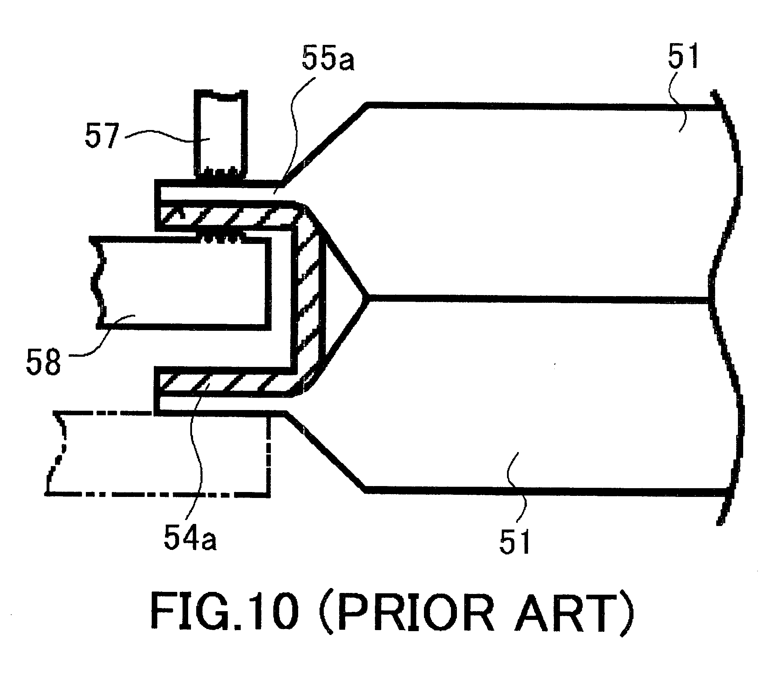

JP-A-2003-249423 discloses the invention of a storage element having an electrode assembly formed of positive electrode plates and negative electrode plates wound into a flattened shape with separators interposed therebetween, in which the substrate exposed portions of each electrode are divided into two bundles for welding to the collector member, in order to render small the stacking width of the respective electrode substrate exposed portions that project out from the separators. The structure of the storage element disclosed in JP-A-2003-249423 will now be described using Figs. 9 and 10. Fig. 9A is a cross-sectional view of an electrical double layer capacitor which serves as the storage element disclosed in JP-A-2003-249423, Fig. 9B is a cross-sectional view along line IXB — IXB in Fig. 9A, Fig. 9C is a cross-sectional view along line IXC - IXC in Fig. 9A, and Fig. 10 is a view showing the welding process between the electrode substrate exposed portions and collector member in Fig. 9.

As Figs. 9A to 9C show, the storage element 50 has a wound electrode assembly 51 in which positive electrode plates, negative electrode plates and interposed separators (all of which are not shown in the figures) are stacked and wound in a flattened shape, and this wound electrode assembly 51 is disposed inside a prismatic outer can 52 made of aluminum. The positive electrode collector member 53a and negative electrode collector member 53b of the storage element 50 have a U-shaped wing portion 54a or 54b, respectively, formed at one end and connected to the substrate exposed portions 55a of the positive electrode plates or the substrate exposed portions 55b of the negative electrode plates, respectively, with the other end being connected to the positive electrode terminal 56a or negative electrode terminal 56b, respectively. Furthermore, the substrate exposed portions 55a of the positive electrode plates are divided into two bundles, of which one is welded to one outer side face of the U-shaped wing portion 54a and the other to the other outer side face, and likewise, the substrate exposed portions 55b of the negative electrode plates are divided into two bundles, one of which is welded to one outer side face of the other U-shaped wing portion 54b and the other to the other outer side face.

For the positive electrode, for example, ultrasonic welding is performed as follows, as shown in Fig. 10. One of the two split bundles of substrate exposed portions 55a of the positive electrode plates is disposed on an outer face of the U-shaped wing portion 54a, the horn 57 of an ultrasonic welding device (not shown in the figure) is brought into contact with the outer surface of the substrate exposed portions 55a, and the anvil 58 is disposed on the inner surface of the U-shaped wing portion 54a. Note that the other bundle of the substrate exposed portions 55a of the positive electrode plates is ultrasonically welded with the same method, and likewise with the negative electrode.

In the case where the two split bundles of positive electrode plates or negative electrode plates are resistance welded, one will consider either the method of welding each bundle separately or the method of series spot welding the bundles simultaneously. Of these, the series spot welding method will be preferable in view of the smaller number of weldings. With the long-used series spot welding technique, in the case where, as shown in Fig, 11, the members to be welded 73 and 74 are welded at two spots coaxially with a pair of resistance welding electrode rods 71 and 72, the method that has mainly been used is to interpose a U-shaped welding piece 75 in the intermediate space and perform the weldings at the top and bottom of the U-shaped welding piece 75. This method is in wide general use because the U-shaped welding piece 75 can be fabricated with ease from flat sheet metal and because it is easy to fabricate projections that will render the resistance welding both easy and stable.

The invention disclosed in JP-A-2003-249423 yields the advantage that the width of the positive electrode exposed portions and of the negative electrode exposed portions can be rendered small, and therefore the volumetric efficiency of the storage device will be good. However, with this invention, there exist problematic aspects that will render the manufacturing equipment complex. These include the fact that several weldings are required in order to weld the positive electrode plates and the negative electrode plates to the positive electrode collector member and negative electrode collector member, respectively; and furthermore, that an open space is needed in the central portion of the wound electrode assembly in order for disposition of the welding-purpose U-shaped wing portions of the positive electrode collector member and negative electrode collector member, and that it is necessary to dispose an anvil in the interior of the LT-shaped wing portions during the ultrasonic welding.

In addition, although it is stated in JP-A-2003-249423 that the ultrasonic welding method will preferably be used for the process of welding the electrode plates, the number of winding turns in the embodiments is 16 (8 for each of the two split bundles), and the stack thickness is 320 µm. As opposed to this, in large-capacity sealed batteries such as the lithium ion secondary batteries for EVs and HEVs, the number of stacked positive electrode substrate exposed portions and negative electrode substrate exposed portions is much greater than in the case of the invention disclosed in JP-A-2003-249423, and moreover the stack thickness is far larger.

Therefore, with large-capacity prismatic sealed batteries such as the lithium ion secondary batteries for EVs and HEVs, in order to use the ultrasonic welding method to weld in a stable condition the stacked positive electrode substrate exposed portions and negative electrode substrate exposed portions to the collector members, a large application of pressure is required to fit the stacked positive electrode substrate exposed portions and negative electrode substrate exposed portions tightly against their respective collector members, and a large energy is required to make the ultrasonic vibration reach as far as the other ends of the stacked positive electrode substrate exposed portions and negative electrode substrate exposed portions. With the invention disclosed in JF-A-2003-249423, the pressure application and ultrasonic energy have to be sustained by the anvil disposed in the interior of the U-shaped collector members, which means that the anvil must have considerable rigidity, and in addition it is extremely difficult in technical terms to find stable welding conditions under which an anvil of the size that can be provided in the collector member interior will sustain the large pressure application.

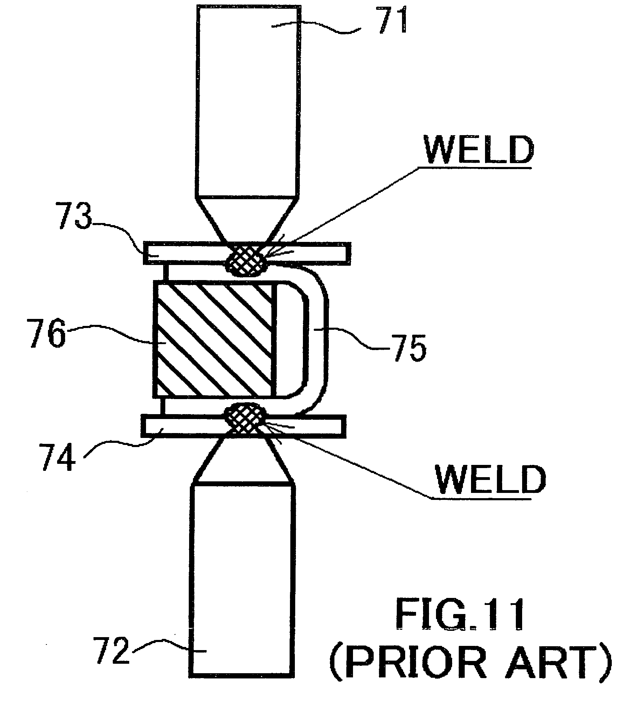

Furthermore, with the long-used method shown in Fig. 11, the positive electrode substrate exposed portions and negative electrode substrate exposed portions can each be series-welded with a single welding, but measures such as providing a pressure receiving piece 76 in the interior of the U-shaped welding piece 75 and/or a metal block for power conduction are needed in order to eliminate distortion of the U-shaped welding piece 75 due to pressure application by the welding electrode rods 71 and 72, and such complexification of the welding equipment has been an issue.

In JP-UM-A-58-113268 there is disclosed an electrode plate substrate yoke 80, shown in Fig. 12, in which electrode substrate groups 84a and 84b, formed by splitting into two bundled groups the substrates 84 of an electrode assembly 83, are placed against the side faces of the base portion 82 of a collector member 81 and integrally series spot-welded thereto together with a pair of stiffening plates 85a and 85b disposed on the outer sides of the electrode substrate groups 84a and 84b.

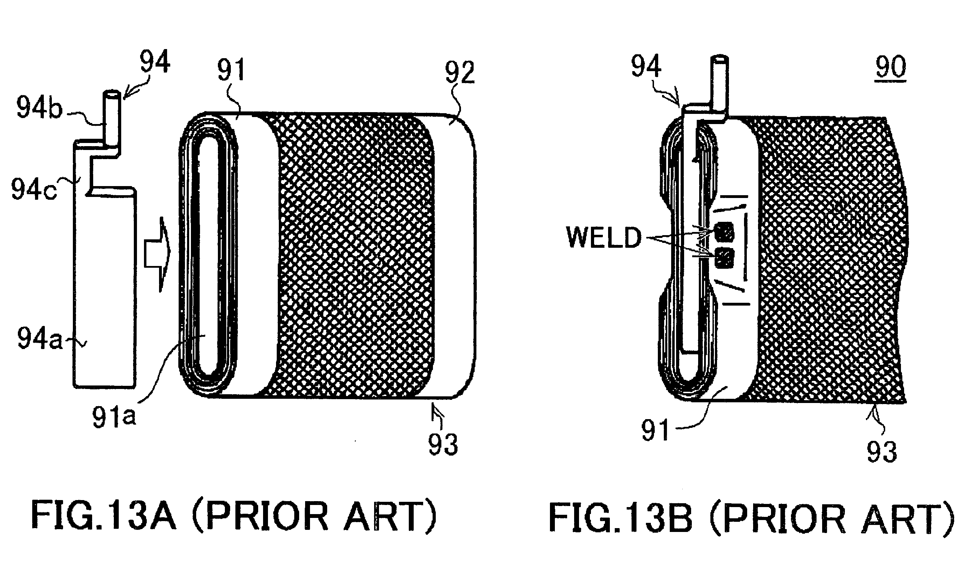

JP-A-2000-40501 discloses a flat wound electrode battery 90 which, as shown in Figs. 13A and 13B, has a flattened wound electrode assembly 93 with positive electrode plates and negative electrode plates wound in such a manner, with separators interposed therebetween, that positive electrode substrate exposed portions 91 and negative electrode substrate exposed portions 92 are disposed on opposing sides; and in which, using for example a positive electrode terminal 94 consisting of a rectangular connecting part 94a that has edge portions made into curved surfaces and that fits into the central hollow space 91a around which the positive electrode substrate exposed portions 91 are wound, a terminal part 94b that projects longitudinally in the flattening direction, orthogonal to the winding axis direction, and a short connecting part 94c that connects such two parts, electrical connection is effected by fitting the terminal part 94b of the positive electrode terminal 94 into the central hollow space 91a around which the positive electrode substrate exposed portions 91 are wound (see Fig. 13A), then performing series spot welding on both sides of the positive electrode substrate exposed portions 91.

However, with the series spot welding methods disclosed in JP-UM-A-58-113268 and JP-A-2000-40501, the substrate exposed portions of the positive electrode plates and negative electrode plates are split into two groups and series spot welded directly to the two sides of the positive electrode terminal or negative electrode terminal, respectively, and because such welding surfaces on the positive electrode terminal or negative electrode terminal are flat surfaces, it has been difficult to render high the strength of the weldings between the positive electrode terminal or negative electrode terminal and the substrate exposed portions of the positive electrode plates or negative electrode plates, respectively, and to render small the variation in the internal resistance of the welds.

In large-capacity prismatic sealed secondary batteries such as the lithium ion secondary batteries for EVs and HEVs, the number of stacked positive electrode substrate exposed portions and negative electrode substrate exposed portions is extremely large, and moreover aluminum or aluminum alloy is used for the positive electrode substrates and positive electrode collector, and copper or copper alloy for the negative electrode substrates and negative electrode collector. Since aluminum, aluminum alloy, copper and copper alloy are materials with low electrical resistance and with good thermal conductivity, it is difficult to render high the strength of the welding between the positive electrode substrate exposed portions and positive electrode terminal and between the negative electrode substrate exposed portions and negative electrode terminal, and still more difficult to render small the variation in the internal resistance of the welds.

### SUMMARY

An advantage of some aspects of the present invention is to provide a prismatic sealed secondary battery, and a manufacturing method therefor, in which the stacked substrate exposed portions of the positive electrode or of the negative electrode, or of both, are split into two groups, a connecting conductive member is stably positioned and disposed therebetween, resistance welding is performed between the substrate exposed portions and the collector members and between the substrate exposed portions and the connecting conductive members, so that enhanced resistance of the welds can be realized, and moreover variation in the welding strength is curbed.

According to an aspect of the invention, a prismatic sealed secondary battery includes: an electrode assembly that has stacked or wound positive electrode substrate exposed portions and negative electrode substrate exposed portions; a collector member that is electrically joined to the positive electrode substrate exposed portions; and a collector member that is electrically joined to the negative electrode substrate exposed portions. The positive electrode substrate exposed portions or the negative electrode substrate exposed portions, or both, are split into two groups, and therebetween is disposed an intermediate member that is made of resin material and holds a plurality of connective conducting members. The collector member for the substrate exposed portions that are split into two groups is disposed on at least one of the outermost faces of the two split groups of substrate exposed portions, and is electrically joined by a resistance welding method to the two split groups of substrate exposed portions, together with the plurality of connecting conductive members of the intermediate member.

With such a prismatic sealed secondary battery of the present aspect, the intermediate member that is made of resin material and holds a plurality of connective conducting members is disposed between the two split groups of positive electrode substrate exposed portions, or of negative electrode substrate exposed portions, or of both. Also, the collector member for the two split groups of substrate exposed portions is disposed on at least one of the outermost faces of the two split groups of substrate exposed portions and is electrically joined by a resistance welding method to the two split groups of substrate exposed portions, together with the plurality of connecting conductive members of the intermediate member.

Consequently, with the prismatic sealed secondary battery of the present aspect, the two split groups of substrate exposed portions can be joined to the connecting conductive members and the collector member in a single operation using the series resistance welding method. In addition, because the plurality of connecting conductive members are held by the intermediate member made of resin material, the precision of the dimensions among the plurality of connecting conductive members can be improved, and moreover they can be positioned and disposed between the two split groups of substrate exposed portions in a stable state, so that the quality of the resistance welds is improved, enabling lowered resistance to be realized. For these reasons, a prismatic sealed secondary battery with raised output and lessened output variation is obtained with the present aspect of the invention.

Note that in the present aspect of the invention, although a collector member for the two split groups of substrate exposed portions may be disposed on either or both of the outermost faces of the two split groups of substrate exposed portions, it is preferable that a collector member be disposed on both such outermost faces. However, by disposing on the other of the two outermost faces of the two split groups of substrate exposed portions a collection receiving member that is not directly connected to the electrode terminal, a functional effect can be exerted that is substantially the same as the case where a collector member is disposed on both outermost faces of the two split groups of substrate exposed portions. Hence, the meaning of "collector member" as used herein includes such a "collection receiving member".

Note further that resistance welding can be executed in a more physically stable state if a collector member is disposed on both of the outermost faces of the two split groups of substrate exposed portions. Moreover, it will be possible not to dispose anything on the other of the two outermost faces of the two split groups of substrate exposed portions, and to perform the resistance welding by bringing one of the pairs of resistance welding electrodes directly into contact with that face. However, in that case, there will be a possibility of fusion occurring between the resistance welding electrodes and the other of the two outermost faces of the two split groups of substrate exposed portions. Therefore, it will be preferable either to dispose on each of the two outermost faces of the two split groups of substrate exposed portions a collector member that is connected to the electrode terminal, or else to dispose on one of such faces a collector member connected to the electrode terminal and dispose on the other of such faces a collection receiving member that serves as a collector member.

Examples of the resin material that can be used for the intermediate member in the prismatic sealed secondary battery of the present aspect include polypropylene (PP), polyethylene (PE), polyvinylidene chloride (PVDC), polyacetal (POM), polyamide (PA), polycarbonate (PC), and polyphenylene sulfide (PPS).

In the prismatic sealed secondary battery of the present aspect, it is preferable that the intermediate member be provided with a hole or cutout, or both.

The holes and/or cutouts provided in the intermediate member will function as gas venting routes that expel gas to the exterior of the electrode assembly in the event that abnormality occurs in the battery and gas is generated in the electrode assembly interior. Thus, if the intermediate member is provided with holes and/or cutouts, any gas that may be generated in the electrode assembly interior can easily be expelled to the exterior of the electrode assembly, and since the pressure -reduction type current interruption mechanism, gas exhaust valve, and so forth, with which a prismatic sealed battery is normally equipped will be activated stably, safety can be secured. In addition, the volume of the intermediate member will be reduced, and therefore it will be possible to render the prismatic sealed battery lighter.

In the prismatic sealed secondary battery of the present aspect, the intermediate member may be provided, on at least one pair of opposed sides, with cutouts parallel to the insertion direction of the intermediate member.

If such a structure is employed, the clasping of the intermediate member by the positioning jig or arm via the cutouts can be rendered more stable during insertion of the intermediate member between the two split groups of substrate exposed portions, and resistance welding of the electrode assembly, in the manufacturing process. Furthermore, since the cutouts are formed parallel to the insertion direction of the intermediate member, clasping and removal of the intermediate member by the positioning jig or arm can be carried out more smoothly. Thus, positioning error and tilting, etc., of the intermediate member relative to the electrode assembly will be prevented, and so the reliability of the electrode assembly welding, and the product yield, can be improved. In addition, since both the intermediate member and the positioning jig or arm are fixed in place simply by fitting together, the manufacturing equipment can be simplified.

Note that it is preferable, from the viewpoint of the stability of the clasping of the intermediate member by the positioning jig or arm, that the cutouts that are formed parallel to the insertion direction of the intermediate member be provided as a pair of cutouts on opposed sides of the intermediate member. In order to keep as small as possible the interference between the positioning jig and/or arm and the positive electrode substrate exposed portions during positioning of the intermediate member and resistance welding of the electrode assembly, it is preferable that the cutouts be provided on the surfaces of the intermediate member that are not opposed to the substrate exposed portions, more precisely on its surfaces other than those from which the connecting conductive members project.

In the prismatic sealed secondary battery of the present aspect, it is preferable that angled portions of the intermediate member be chamfered.

With the angled portions of the intermediate member chamfered in the prismatic sealed secondary battery of the present aspect, during insertion of the intermediate member between the stacked substrate exposed portions, the chamfered intermediate member will cause little damage to the pliable substrate exposed portions if it contacts them, and the plurality of connecting conductive members can easily be made to contact against the substrate exposed portions. As a result, the weldability will be improved.

With such a prismatic sealed secondary battery of the present aspect, the resin material portions of the intermediate member protrude, in the extension direction of the two split groups of substrate exposed portions, beyond the ends of the two split substrate exposed portions and the ends of the collector member to the prismatic outer can. Since the electrode assembly is inserted into the prismatic outer can in such a manner that the positive electrode substrate exposed portions are positioned at one end, and the negative electrode substrate exposed portions at the other end, of the prismatic outer can, in such a prismatic sealed secondary battery of the present aspect, the protruding resin material portions of the intermediate member will be positioned at the two inside ends of the prismatic outer can, thus eliminating the risk of the ends of the two split groups of substrate exposed portions and the ends of the collector member contacting with the two inside ends of the prismatic outer can. Hence, such a prismatic sealed secondary battery of the present aspect will be a highly reliable prismatic sealed secondary battery in which the risk of the positive electrode substrate exposed portions and/or the negative electrode substrate exposed portions short-circuiting with the prismatic outer can is suppressed.

Note that usually in prismatic sealed secondary batteries, the electrode assembly is wrapped in a folded-back plate-like resin sheet when inserted into the prismatic outer can, and with the prismatic sealed secondary battery of the present aspect, even if the resin sheet is mispositioned, contacting of the positive electrode substrate exposed portions and/or the negative electrode substrate exposed portions with the prismatic outer can will be reliably suppressed because the protruding resin material portions of the intermediate member will be positioned at the two inside ends of the prismatic outer can of the electrode assembly. In addition, if external force should act on the prismatic sealed secondary battery of the present aspect and deform the outer can, the possibility of the positive electrode substrate exposed portions and/or the negative electrode substrate exposed portions contacting with the prismatic outer can will be smaller than in the case where the electrode assembly is covered simply by a resin sheet, because the resin material portions of the intermediate member are rigid bodies and therefore are not likely to deform. Thus, a prismatic sealed secondary battery with high reliability can be obtained.

In addition, the resin material portion of the intermediate member is of such a size as to protrude beyond both the ends of the substrate exposed portions and the ends of the collector member when the intermediate member has been inserted between the two split groups of positive electrode substrate exposed portions and/or of negative electrode substrate exposed portions, which means that the intermediate member can be clasped at its protruding resin material portion when it is inserted between the two split groups of substrate exposed portions, thereby yielding the additional advantages of facilitating insertion, facilitating the clasping of the intermediate member, and facilitating assembly.

In the prismatic sealed secondary battery of the present aspect, it is preferable that the connecting conductive members be block-shaped or columnar body-shaped.

With the connecting conductive members being block-shaped or columnar body-shaped in the prismatic sealed secondary battery of the present aspect, deformation will be unlikely to occur when the pushing pressure is applied during resistance welding, the physical properties of the welds will be stabilized, and moreover the quality of the welds will be good. Note that shapes that are not liable to deformation, such as cylindrical columnar, square columnar, elliptical columnar, circular cylindrical, square cylindrical, or elliptical cylindrical, can be employed for the shape of the connecting conductive members.

In the prismatic sealed secondary battery of the present aspect, it is preferable that the angled portions of two mutually opposed surfaces of the block shapes or columnar body shapes be chamfered.

With the angled portions of two mutually opposed surfaces of the block shapes or columnar body shapes being chamfered in the prismatic sealed secondary battery of the present aspect, during insertion of the intermediate member between the stacked substrate exposed portions, the connecting conductive members will cause little damage to the pliable substrate exposed portions if they contact them, and the plurality of connecting conductive members can easily be made to contact against the substrate exposed portions. As a result, the weldability will be improved. Moreover, since the areas of the two opposed surfaces of the connecting conductive members will become small, those surfaces will act as projections, which means that the current will be concentrated and heat-up will readily take place, so that the physical properties of the welds will be stabilized, and moreover the quality of the welds will be good.

In the prismatic sealed secondary battery of the present aspect, it is preferable that the chamfered surfaces of the connecting conductive members be planes.

The chamfered surfaces of the plurality of connecting conductive members can take the form either of curved surfaces or of planes. However, if the chamfered surfaces take the form of planes, then during insertion of the intermediate member between the stacked substrate exposed portions, the surfaces with chamfered angled portions and the surfaces of the intermediate member where the connecting conductive members are exposed will, of necessity, form obtuse angles with respect to the substrate exposed portions. For this reason, the substrate exposed portions and the plurality of connecting conductive members will readily come into contact when the intermediate member is inserted between the stacked substrate exposed portions and resistance welding is performed in the prismatic sealed secondary battery of the present aspect. As a result, the weldability will be improved.

According to another aspect of the invention, a method for manufacturing a prismatic sealed secondary battery includes the following steps (1) to (5):
(1) fabricating, by stacking or winding positive electrode plates and negative electrode plates with a separator interposed therebetween, a flattened electrode assembly with a plurality of stacked positive electrode substrate exposed portions formed at one end and a plurality of stacked negative electrode substrate exposed portions formed at the other end;
(2) splitting the stacked positive electrode substrate exposed portions, or negative electrode substrate exposed portions, or both, into two groups;
(3) disposing a collector member on the two outermost surfaces of the two split groups of substrate exposed portions, and disposing an intermediate member that is made of resin material and holds a plurality of connecting conductive members, between the two split groups of substrate exposed portions, in such a manner that two opposed faces of the connecting conductive members each contact with one of the two split groups of substrate exposed portions;
(4) placing pairs of resistance welding electrodes against the collector members disposed on the two outermost surfaces of the two split groups of substrate exposed portions; and
(5) carrying out resistance welding while applying pushing pressure between the pairs of resistance welding electrodes.

With the method for manufacturing a prismatic sealed secondary battery of the present aspect, steps are included whereby the stacked positive electrode substrate exposed portions, or negative electrode substrate exposed portions, or both, are split into two groups, a collector member is disposed on the two outermost surfaces of such two split groups of positive electrode substrate exposed portions and/or negative electrode substrate exposed portions, an intermediate member, which is made of resin material and holds a plurality of connecting conductive members, is disposed between the two split groups of substrate exposed portions in such a manner that two opposed faces of the connecting conductive members each contact with one of the two split groups of substrate exposed portions, pairs of resistance welding electrodes are placed against the collector members that have been disposed on the two outermost surfaces of the two split groups of substrate exposed portions, and resistance welding is carried out while applying pushing pressure between the pair of resistance welding electrodes. In such resistance welding process, the resistance welding current flows, in the two split groups of substrate exposed portions, through the following items in the order given: collector member, substrate exposed portions, connecting conductive members, substrate exposed portions, collector member. Because of this, welding can be performed simultaneously between the collector members and the substrate exposed portions and between the substrate exposed portions and the connecting conductive members, in a single resistance welding operation.

Moreover, because the plurality of connecting conductive members are held by an intermediate member that is made of resin material, the precision of the dimensions among the plurality of connecting conductive members can be improved, and moreover they can be positioned and disposed between the two split groups of positive electrode substrate exposed portions or negative electrode substrate exposed portions in a stable state, so that the quality of the resistance welds is improved, enabling realization of lowered resistance. For these reasons, a prismatic sealed secondary battery with raised output and lessened output variation is obtained with the present aspect of the invention.

In addition, with the method for manufacturing a prismatic sealed secondary battery of the present aspect, the plurality of stacked positive electrode substrate exposed portions, or negative electrode substrate exposed portions, or both, are split into two groups after being stacked, thus reducing by half the number of stacked positive electrode substrate exposed portions or negative electrode substrate exposed portions that must be welded in one resistance welding, and enabling resistance welding with less electrical power. As regards the step of disposing a collector member on each of the two outermost surfaces of the two split groups of positive electrode substrate exposed portions or negative electrode substrate exposed portions, and the step of disposing an intermediate member, which is made of resin material and holds a plurality of connecting conductive members, between the two split groups of positive electrode substrate exposed portions or negative electrode substrate exposed portions, note that it does not matter which of these steps is performed first and which second. Moreover, although with the method for manufacturing a prismatic sealed secondary battery of the present aspect it is necessary, because a single intermediate member that is made of resin material and holds a plurality of connecting conductive members is used, to perform resistance welding for the single intermediate member as many times as there are connecting conductive members, it is possible to resistance-weld them at once, or each connecting conductive member individually.

In the method for manufacturing a prismatic sealed secondary battery of the present aspect, it is preferable that the intermediate member be provided with a hole or cutout, or both.

The holes and/or cutouts provided in the intermediate member will function as gas venting routes that expel gas to the exterior of the electrode assembly in the event that abnormality occurs in the battery and gas is generated in the electrode assembly interior. Thus, if the intermediate member is provided with holes and/or cutouts, then the pressure-reduction type current interruption mechanism, gas exhaust valve, and so forth, with which a prismatic sealed battery is normally equipped will be activated stably, and so safety can be secured. In addition, the volume of the intermediate member will be reduced, and therefore it will be possible to obtain a lighter prismatic sealed battery.

The intermediate member in the method for manufacturing a prismatic sealed secondary battery of the present aspect may be provided, on at least one pair of opposed sides of the intermediate member, with a cutout parallel to the insertion direction of the intermediate member. If an item with cutouts formed parallel to the insertion direction of the intermediate member is used for the intermediate member, the clasping of the intermediate member by the positioning jig or arm can be rendered more stable by means of such cutouts. In addition, since the cutouts are formed parallel to the insertion direction of the intermediate member, clasping and removal of the intermediate member by the positioning jig or arm can be carried out more smoothly.

Thus, with the method for manufacturing a prismatic sealed secondary battery of the present aspect, it is possible, by carrying out steps (3) to (5) with the intermediate member clasped by the positioning jig or arm via the above-described cutouts, to prevent positioning error and tilting, etc., of the intermediate member relative to the electrode assembly and so to manufacture a prismatic sealed secondary battery with further enhanced reliability of electrode assembly welding. In addition, it will be possible to improve the product yield. Furthermore, since both the intermediate member and the positioning jig or arm are fixed solidly in place simply by fitting together, the manufacturing equipment can be simplified.

In the method for manufacturing a prismatic sealed secondary battery of the present aspect, it is preferable, from the viewpoint of the stability of the clasping of the intermediate member by the positioning jig or arm, and in order to keep as small as possible the interference between the positioning jig and/or arm and the positive electrode substrate exposed portions, that an intermediate member be provided on its surfaces that are not opposed to the substrate exposed portions, more precisely on its surfaces other than those from which the connecting conductive members project.

The intermediate member in the method for manufacturing a prismatic sealed secondary battery of the present aspect may have chamfered angled portions.

With an intermediate member whose angled portions have been chamfered being used in the method for manufacturing a prismatic sealed secondary battery of the present aspect, during insertion of the intermediate member between the stacked substrate exposed portions, the chamfered intermediate member will cause little damage to the pliable substrate exposed portions if it contacts them, and the plurality of connecting conductive members can easily be made to contact against the substrate exposed portions. As a result, the weldability will be improved.

The connecting conductive members in the method for manufacturing a prismatic sealed secondary battery of the present aspect may be block-shaped or columnar body-shaped items the ends of which project from the intermediate member.

With connecting conductive members that are block-shaped or columnar body-shaped being used in the method for manufacturing a prismatic sealed secondary battery of the present aspect, deformation will be unlikely to occur when the pushing pressure is applied during resistance welding, the physical properties of the welds will be stabilized, and moreover the quality of the welds will be good. Note that shapes that are not liable to deformation, such as cylindrical columnar, square columnar, elliptical columnar, circular cylindrical, square cylindrical, or elliptical cylindrical, can be employed for the shape of the connecting conductive members. Moreover, because in such case the tips of the connecting conductive members will project from the intermediate member, these projecting tips will be strongly pushed against the two split groups of substrate exposed portions, and therefore will act as projections, and the current will be concentrated and heat-up will readily take place, so that the physical properties of the welds will be stabilized, and moreover the quality of the welds will be good. Note that the method for manufacturing a prismatic sealed secondary battery of the present aspect also includes the case where the tips of the connecting conductive members melt and disappear.

The connecting conductive members in the method for manufacturing a prismatic sealed secondary battery of the present aspect may have mutually parallel planar portions provided on two opposed surfaces at the front of the block or columnar body and have chamfered angled portions.

With mutually parallel planar portions being provided on each of two opposed surfaces at the front of the blocks or columnar bodies constituting the connecting conductive members, and moreover with the angled portions being chamfered, in the method for manufacturing a prismatic sealed secondary battery of the present aspect, the surfaces of each of such two opposed surfaces of the connecting conductive members will be rendered smaller, and therefore during resistance welding such two opposed surfaces of the connecting conductive members will function as projections, and the current will be concentrated and heat-up will readily take place, so that the physical properties of the welds will be stabilized, and moreover the quality of the welds will be good. In addition, since the angled portions of the connecting conductive members will be chamfered, during insertion of the intermediate member between the stacked substrate exposed portions, the chamfered intermediate member will cause little damage to the pliable substrate exposed portions if it contacts them, and the plurality of connecting conductive members can easily be made to contact against the substrate exposed portions. As a result, the weldability will be improved.

In the method for manufacturing a prismatic sealed secondary battery of the present aspect, it is preferable that the chamfered portions of the connecting conductive members be planar.

The chamfered surfaces of the plurality of connecting conductive members can take the form either of curved surfaces or of planes. However, if the chamfered surfaces take the form of planes, then during insertion of the intermediate member between the stacked substrate exposed portions, the surfaces with chamfered angled portions and the surfaces of the intermediate member where the connecting conductive members are exposed will, of necessity, form obtuse angles with respect to the substrate exposed portions. For this reason, the substrate exposed portions and the plurality of connecting conductive members will readily come into contact when the intermediate member is inserted between the stacked substrate exposed portions and resistance welding is performed in the method for manufacturing a prismatic sealed secondary battery of the present aspect. As a result, the weldability will be improved.

In the method for manufacturing a prismatic sealed secondary battery of the present aspect, it is preferable that protrusions be formed on two opposed surfaces of the connecting conductive members.

With protrusions being formed on two opposed surfaces of the connecting conductive members in the method for manufacturing a prismatic sealed secondary battery of the present aspect, during resistance welding the current will be concentrated at the protrusion tips, which will act as projections, so that heat-up will more readily take place, the weldability will be further improved, and moreover the quality of the welds will be good. The shape of the protrusions will preferably be that of a truncated cone or truncated pyramid.

In the method for manufacturing a prismatic sealed secondary battery of the present aspect, it is preferable that apertures be formed on two opposed surfaces of the connecting conductive members.

If apertures are not formed on two opposed surfaces of the connecting conductive members, heat that is generated in two opposed surfaces of a connecting conductive member will propagate throughout the whole of the connecting conductive member, and so the temperature of the two opposed surfaces of a connecting conductive member will not readily rise. By contrast, if apertures are formed on two opposed surfaces of the connecting conductive members, current will be concentrated on the two opposed surfaces of each connecting conductive member to a corresponding extent, and so heat-up will readily take place in a concentrated manner on the two opposed surfaces of the connecting conductive member, and moreover, the heat that is generated in the two opposed surfaces of the connecting conductive member will be prevented from propagating throughout the whole of the connecting conductive member. As a result, the temperature will rise locally on the two opposed surfaces of the connecting conductive member, and in the neighboring areas, so that it will be possible to perform welding connection well.

In addition, if apertures are formed on two opposed surfaces of the connecting conductive members, then if the pushing pressure is forcefully applied during resistance welding, the apertures on the two opposed surfaces of the connecting conductive members will be crushed and hollows will be formed in the interior. Besides that, the crushed portion will be focused on the central portion of the two opposed surfaces of the connecting conductive members, so that the current that flows during resistance welding will first be broken up around the apertures in the two opposed surfaces of the connecting conductive members, then afterward will be concentrated in the central portion of the connecting conductive members, with the result that not only the two opposed surface portions of the connecting conductive members, but also central portions of the two opposed surfaces of the connecting conductive members, will heat up well, and it will be possible to perform welding connection in a better manner.

Note that in the case where protrusions are provided both on the cylindrical columnar or similarly shaped main body portion of the connecting conductive members and on two opposed surfaces thereof, and apertures are formed in such protrusions, it will be preferable that the apertures extend into the interior of the main body portion. If the apertures extend into the interior of the main body portion, then if the protrusion tips are crushed due to being forcefully pinched by the resistance welding electrode rods during welding, hollows will be reliably formed in the interior of the main body portion.

In the method for manufacturing a prismatic sealed secondary battery of the present aspect, the apertures may penetrate fully through the connecting conductive members.

It is desirable that the connecting conductive members for resistance welding do not readily deform due to the pushing pressure during resistance welding, and moreover have small resistance. With connecting conductive members that have apertures penetrating fully through them being used in the method for manufacturing a prismatic sealed secondary battery of the present aspect, the connecting conductive members are cylindrical, and hence it will be possible to manufacture with ease a prismatic sealed secondary battery that yields the above-described advantages, even though the connecting conductive members are lightweight.

In the method for manufacturing a prismatic sealed secondary battery of the present aspect, it is preferable that in step (5) the pushing pressure be applied in such a manner that the apertures are semi-crushed.

With the apertures that are formed in the connecting conductive members being semi-crushed, hollows will be formed in the interior when the apertures are crushed, and also the crushed portions will be focused on the central portion of the connecting conductive members, so that the current that flows during resistance welding will first be broken up around the apertures in the connecting conductive members, then afterward will be concentrated in the central portion of the connecting conductive members. Therefore in this case, in contrast to the case where the apertures that are formed in the connecting conductive members are not semi-crushed, not only the peripheral portions of the connecting conductive members, but also the central portions of the connecting conductive members, will heat up well, and so it will be possible to manufacture a prismatic sealed secondary battery that better yields the above-described advantages. Note that it will not be desirable to fully crush the apertures that are formed in the connecting conductive members, that is, render them into a state such that hollows will not be formed in the interior of the connecting conductive members as a result of pressure application during welding, because then the advantages of forming apertures in the connecting conductive members will be few.

In the method for manufacturing a prismatic sealed secondary battery of the present aspect, it is preferable that ring-shaped insulating seal material be disposed on two opposed surfaces of the connecting conductive members to serve as the intermediate member.

With ring-shaped insulating seal material being disposed on two opposed surfaces of the connecting conductive members, which are for use in resistance welding, the peripheries of the welds between the connecting conductive members and the substrate exposed portions will be surrounded by the ring-shaped insulating seal material, and so any spattered high-temperature dust that may occur during resistance welding can be captured between the insulating seal material and the connecting conductive members, and/or by the insulating seal material itself. For this reason, with such ring-shaped insulating seal material being used in the method for manufacturing a prismatic sealed secondary battery of the present aspect, high-temperature dust that is spattered during resistance welding will be unlikely to disperse onto the peripheries of the connecting conductive members, and so the internal short circuits that can be caused by spattered high-temperature dust in a prismatic sealed secondary battery will be unlikely to occur.

In order to enhance the capturing characteristics with regard to spattered high-temperature dust, it is desirable that the insulating seal material be formed from insulative thermally melt-bonding resin. With insulative thermally melt-bonding resin being used for the insulating seal material, spattered high-temperature dust that occurs during resistance welding will partially melt the solid insulative thermally melt-bonding resin and thereby be deprived of heat, rapidly cool, and fall in temperature, with the result that it will easily be captured inside the solid insulative thermally melt-bonding resin. Note that since, during resistance welding, the duration for which the current is passed is short and moreover the area over which the current flows is narrow, it will seldom occur that all of the insulative thermally melt-bonding resin will melt at the same time. Therefore, it will seldom occur that spattered dust that occurs during resistance welding will disperse from the insulative thermally melt-bonding resin and enter into the interior of the flattened electrode assembly. Hence, a sealed battery can be obtained that has lower occurrence of internal short-circuits and higher reliability. Note that the insulative thermally melt-bonding resin will preferably be one that has a melting temperature of 70 to 150°C and dissolving temperature of 200°C or higher, and preferably one that further has chemical resistance with regard to electrolyte and the like. Note that the insulating seal material that is used will preferably have a height that is lower than the height of the connecting conductive members.

In the method for manufacturing a prismatic sealed secondary battery of the present aspect, it is preferable that the shape caf the exposed portions of the connecting conductive members between the positive electrode substrate exposed portions differ from that of those between the negative electrode substrate exposed portions.

In ordinary sealed batteries, differing metal materials are used for the positive electrode substrate and for the negative electrode substrate. For example, in lithium ion secondary batteries, aluminum or aluminum alloy is used for the positive electrode substrate, and copper or copper alloy is used for the negative electrode substrate. Since copper and copper alloy have low electrical resistance compared with aluminum and aluminum alloy, it is more difficult to resistance-weld the negative electrode substrate exposed portions than to resistance-weld the positive electrode substrate exposed portions, and hard-to-melt portions are prone to occur in the stacked negative electrode substrate exposed portion interior.

With the shape of the exposed portions of the connecting conductive members between the positive electrode substrate exposed portions differing from that of those between the negative electrode substrate exposed portions in the method for manufacturing a prismatic sealed secondary battery of the present aspect, connecting conductive members can be selected and used that have an optimal shape between the positive electrode substrate exposed portions and between the negative electrode substrate exposed portions. For example, in the case where aluminum or aluminum alloy is used as the material for forming the positive electrode substrates, and copper or copper alloy is used as the material for forming the negative electrode substrates, it will be desirable, in order to concentrate the welding electric current and render the resistance welding easy to perform, to use a protrusion-like shape with apertures formed therein for the shape of the exposed portion of the connecting conductive members that is used between the negative electrode substrate exposed portions, while for the shape of the exposed portion of the connecting conductive members that is used between the positive electrode substrate exposed portions, it will be desirable to use a protrusion-like shape, but without apertures formed therein, so that the resistance welding will proceed easily and the connecting conductive members will be less liable to deform.

### BRIEF DESCRIPTION OF THE DRAWING

The invention will be described with reference to the accompanying drawings, wherein the same numbers refer to the same elements throughout.
Fig. 1A is a cross-sectional view of a nonaqueous electrolyte secondary battery of the First Embodiment, Fig. 1B is a cross-sectional view along line IB - IB in Fig. 1A, and Fig. 1C is a cross-sectional view along line IC - IC in Fig. 1A.
Fig. 2A is a top view of a positive electrode connecting conductive member in the First Embodiment, Fig. 2B is a cross-sectional view along line IIB - IIB in Fig. 2A, Fig. 2C is a front view of the positive electrode connecting conductive member, and Fig. 2D is a front view of a positive electrode intermediate member.
Fig. 3 is a side view showing the welding conditions pertaining to the First Embodiment.
Fig. 4A is a view showing the route by which the resistance welding current flows in the case where the portion of the protrusion that contacts with the positive electrode substrate exposed portions is annular, Fig. 4B is a view showing the portions in Fig. 4A where heat-up is intense, Fig. 4C is a view showing the route by which the resistance welding current flows in the case where the portion of the protrusion that contacts with the positive electrode substrate exposed portions is circular, and Fig. 4D is a view showing the portions in Fig. 4C where heat-up is intense.
Figs. 5A to 5C are schematic views showing the shape of the positive electrode connecting conductive member pertaining to the Second to Fourth Embodiments, respectively, and Fig. 5D is a schematic side view showing the positive electrode intermediate member of the Fourth Embodiment in the state where it has been installed to the positive electrode substrate exposed portions, which are split into two groups.
Fig. 6A is a side view showing the post-welding disposition of the positive electrode connecting conductive member portion in the Fifth Embodiment, and Fig. 6B is a side view showing the post-welding disposition of the positive electrode connecting conductive member portion in the Sixth Embodiment.

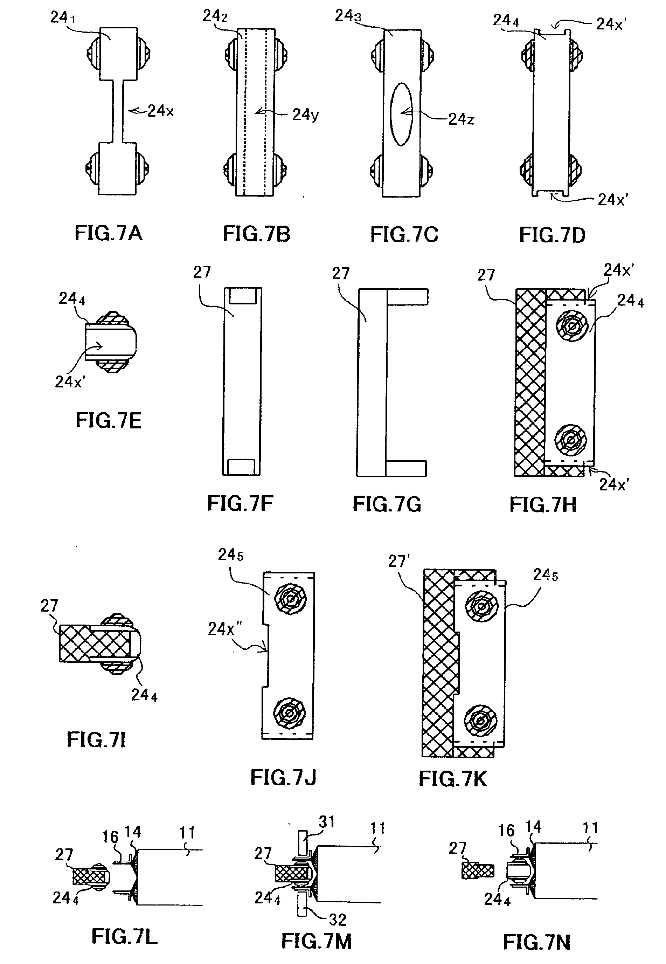

Figs. 7A to 7D are front views showing the shape of the positive electrode intermediate member in the Seventh to Tenth Embodiments, respectively, Fig. 7E is a side view of the positive electrode intermediate member in the Tenth Embodiment, Figs. 7F and 7G are a front view and a side view, respectively, of the positioning jig that is used in combination with the positive electrode intermediate member in the Tenth Embodiment, Figs. 7H and 7I are a top view and a side view, respectively, of the positive electrode intermediate member in the state where it is clasped by the positioning jig in the Tenth Embodiment, Figs. 7J and 7K are, respectively, a top view of a positive electrode intermediate member exhibiting a variant shape, and a top view of such member in the state where it is clasped by the positioning jig, in a variant of the Tenth Embodiment, and Figs. 7L to 7N are side views showing the process of collector resistance welding pertaining to the Tenth Embodiment.
Fig. 8A is a front view of the positive electrode connecting conductive member portion in the Eleventh Embodiment, Fig. 8B is a longitudinal sectional view through Fig. 8A, Fig. 8C is a top view of the ring-shaped insulating seal material, and Fig. 8D is a longitudinal sectional view of the positive electrode intermediate member in the Eleventh Embodiment.
Fig. 9A is a cross-sectional view of an electrical double layer capacitor which serves as a storage element in the related art, Fig. 9B is a cross-sectional view along line IXB - IXB in Fig. 9A, Fig. 9C is a cross-sectional view along line IXC - IXC in Fig. 9A.
Fig. 10 is a view showing the welding process between the electrode substrate exposed portion and collector member in Fig. 9.
Fig. 11 is a view explicating the series spot welding method that has long been in use.

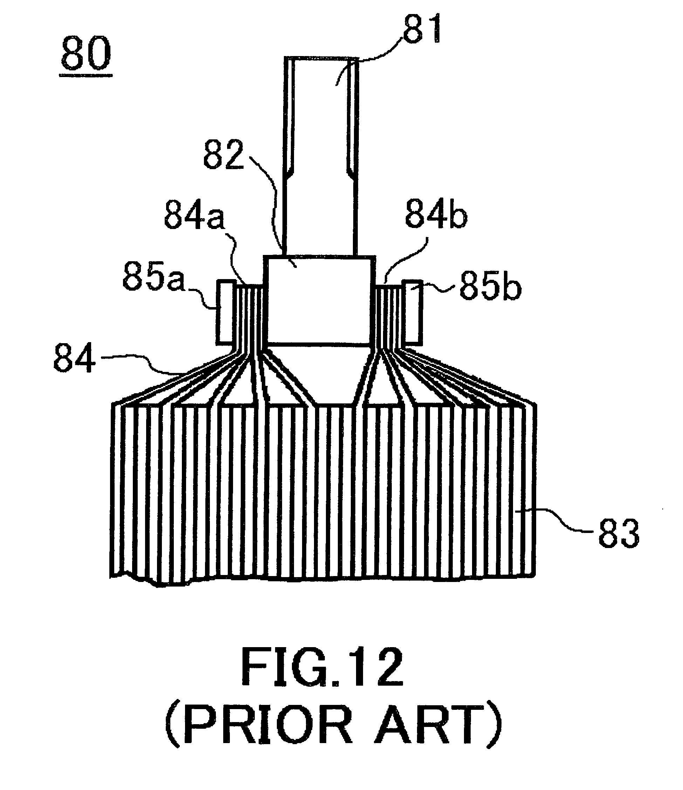

Fig. 12 is a cross-sectional view of an electrode plate substrate yoke that has been welded with the series spot welding method that has long been in use.
Fig. 13A. is an exploded perspective view of a positive electrode terminal and positive electrode substrate exposed portions in the pre-welding state in another example of the related art, and Fig. 13B is a perspective view of those items in the post-welding state.

### DESCRIPTION OF EXEMPLARY EMBODIMENTS

Preferred embodiments for carrying out the invention will now be described in detail with reference to the accompanying drawings. However, it should be remembered that the various embodiments set forth below are intended by way of examples for understanding the technical concepts of the invention, and not by way of limiting the invention to these particular prismatic sealed secondary batteries. The invention can equally well be applied to produce many different variants of the embodiments without departing from the scope and spirit of the technical concepts set forth in the claims. Note that although the invention is applicable to a flattened battery that uses a generation element, a plurality of stacked positive electrode substrate exposed portions formed at one end and a plurality of stacked negative electrode substrate exposed portions formed at the other end, which can be made either by stacking or by winding positive electrode plates and negative electrode plates with separators interposed therebetween, the embodiment descriptions below use flattened wound electrode assemblies as representative examples.

### First Embodiment

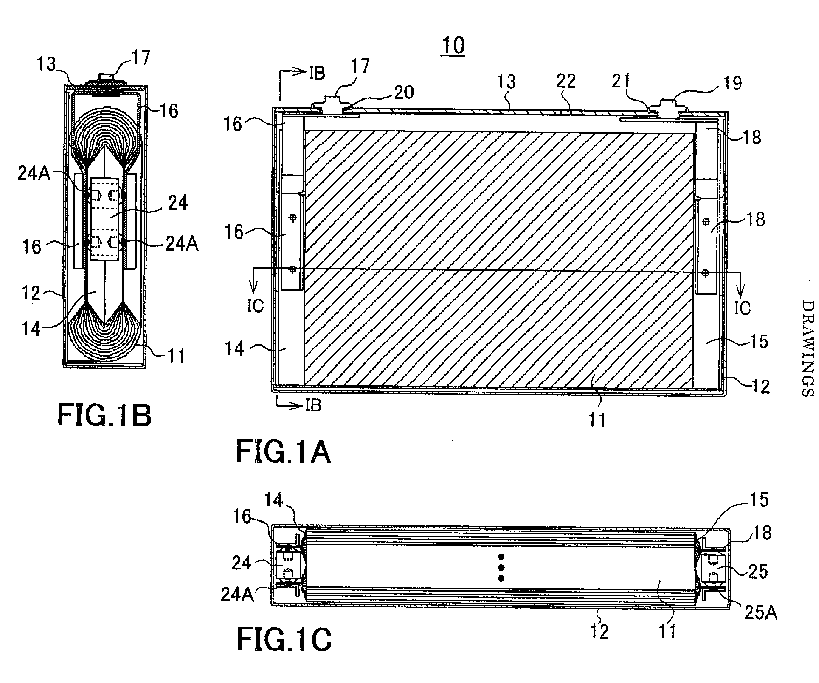

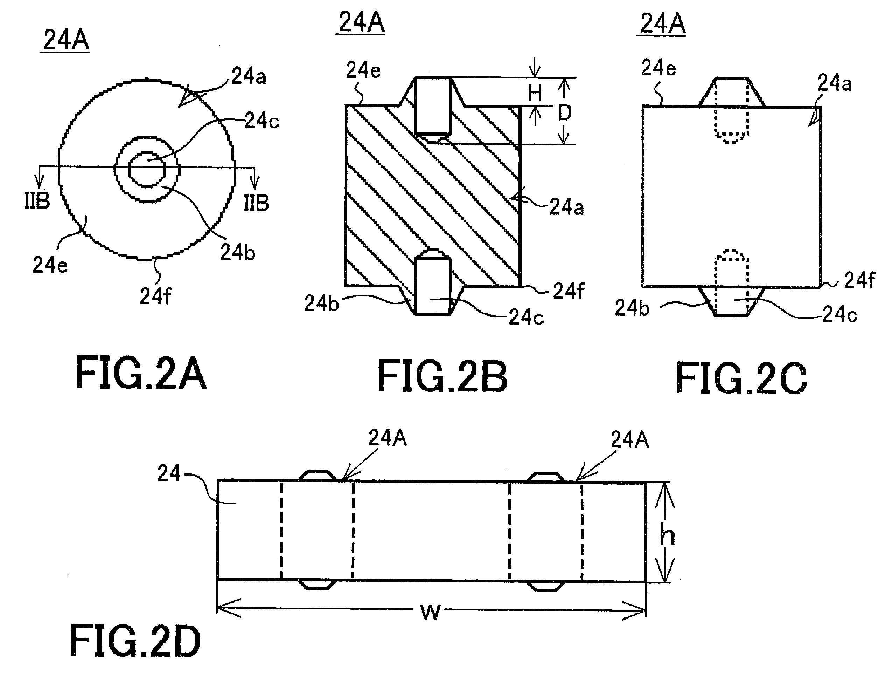

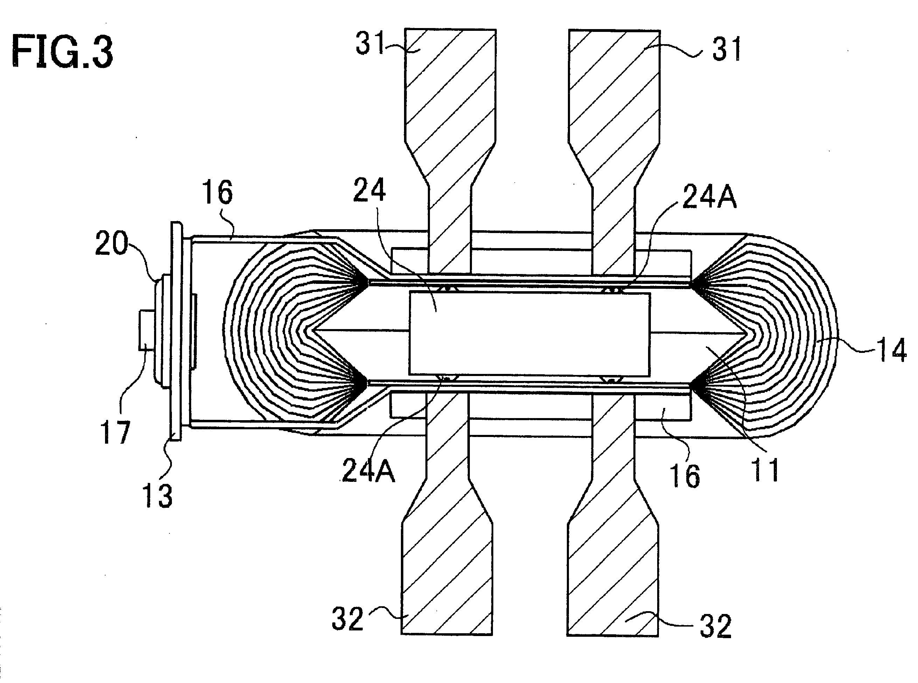

First of all, as an example of a prismatic sealed secondary battery of the First Embodiment, a prismatic nonaqueous electrolyte secondary battery will be described using Figs. 1 to 3. Fig. 1A is a cross-sectional view of a nonaqueous electrolyte secondary battery of the First Embodiment, Fig. 1B is a cross-sectional view along line IB - IB in Fig. 1A, and Fig. 1C is a cross-sectional view along line IC - IC in Fig. 1A. Fig. 2A is a top view of a positive electrode connecting conductive member in the First Embodiment, Fig. 2B is a cross-sectional view along line IIB - IIB in Fig. 2A, Fig. 2C is a front view of the positive electrode connecting conductive member, and Fig. 2D is a front view of a positive electrode intermediate member. Fig. 3 is a side view showing the welding conditions pertaining to the First Embodiment.

This nonaqueous electrolyte secondary battery 10 has a flattened wound electrode assembly 11 in which positive electrode plates and negative electrode plates are wound with separators interposed therebetween (all of these are not shown in the figures). The positive electrode plates are fabricated by spreading positive electrode active material mixture over both faces of a positive electrode substrate constituted of aluminum foil, drying such mixture and rolling the resulting plate, then slitting the plate so that a strip of aluminum foil is exposed. Likewise, the negative electrode plates are fabricated by spreading negative electrode active material mixture over both faces of a negative electrode substrate constituted of copper foil, drying such mixture and rolling the resulting plate, then slitting the plate so that a strip of copper foil is exposed.

Next, the positive electrode plates and negative electrode plates thus obtained are displaced so that the aluminum foil exposed portions of the positive electrode plates do not overlie the active material layer of one of the opposed electrodes, and the copper foil exposed portions of the negative electrode plates do not overlie the active material layer of the other opposed electrode, and are then wound with polyethylene porous separators interposed therebetween, to produce a flattened wound electrode assembly 11 that has a plurality of positive electrode substrate exposed portions 14 piled one above another at one end in the winding axis direction, and a plurality of negative electrode substrate exposed portions 15 piled one above the other at the other end.

The plurality of positive electrode substrate exposed portions 14 are stacked and connected via positive electrode collector members 16 to a positive electrode terminal 17, and likewise the plurality of negative electrode substrate exposed portions 15 are stacked and connected via negative electrode collector members 18 to a negative electrode terminal 19. Note that the positive electrode terminal 17 and the negative electrode terminal 19 are each fixed to a sealing plate 13 with an insulating member 20, 21 respectively, interposed. To fabricate this prismatic nonaqueous electrolyte secondary battery 10 of the First Embodiment, the flattened wound electrode assembly 11 fabricated in the foregoing manner is inserted, with an insulating sheet (not shown in the figures) interposed all around except for the sealing plate 13 edge, into a prismatic outer can 12, after which the sealing plate 13 is laser-welded to the mouth portion of the outer can 12, then nonaqueous electrolyte is poured in through an electrolyte pour hole 22, and the electrolyte pour hole 22 is sealed over.

In the positive electrode part of the flattened wound electrode assembly 11, as shown in Figs. 1B and 1C, the stacked plurality of positive electrode substrate exposed portions 14 are split into two groups, between which is sandwiched a positive electrode intermediate member 24 that is constituted of resin material and holds a plurality of (two in this example) positive electrode connecting conductive members 24A. Likewise in the negative electrode part, the stacked plurality of negative electrode substrate exposed portions 15 are split into two groups, between which is sandwiched a negative electrode intermediate member 25 that is constituted of resin material and holds two negative electrode connecting conductive members 25A. Also, on each of the two outermost surfaces of the positive electrode substrate exposed portions 14, located at the two sides of the positive electrode connecting conductive members 24A, there is disposed a positive electrode collector member 16, and on each of the two outermost surfaces of the negative electrode substrate exposed portions 15, located at the two sides of the negative electrode connecting conductive members 25A, there is disposed a negative electrode collector member 18.

Note that in the First Embodiment, the positive electrode intermediate member 24 and the negative electrode intermediate member 25 hold two positive electrode connecting conductive members 24A or negative electrode connecting conductive members 25A, respectively, as an example, but the number of positive electrode connecting conductive members 24A or negative electrode connecting conductive members 25A that is provided may, depending on the battery output, etc., that is required, be three or more as appropriate. Also, the positive electrode connecting conductive members 24A are made of the same material - aluminum - as the positive electrode substrates, and the negative electrode connecting conductive members 25A are made of the same material - copper - as the negative electrode substrates, but the shapes of the positive electrode connecting conductive members 24A and the negative electrode connecting conductive members 25A may either be the same or differ.

Resistance welding is performed both between these positive electrode collector members 16 and the positive electrode substrate exposed portions 14, and between the positive electrode substrate exposed portions 14 and the positive electrode connecting conductive members 24A (at four places in each case, see Fig. 1B). Likewise, connection is effected, by resistance welding, between the negative electrode collector members 18 and the negative electrode substrate exposed portions 15, and between the negative electrode substrate exposed portions 15 and the negative electrode connecting conductive members 25A (at four places in each case).

Detailed descriptions will now be given, using Figs. 2 and 3, of the specific manufacturing method for the flattened wound electrode assembly 11, together with the resistance welding method using the positive electrode substrate exposed portions 14, the positive electrode collector members 16 and the positive electrode intermediate member 24 having positive electrode connecting conductive members 24A, and of the resistance welding method using the negative electrode substrate exposed portions 15, the negative electrode collector members 18 and the negative electrode intermediate member 25 having negative electrode connecting conductive members 25A. Since, however, the shapes of the positive electrode connecting conductive members 24A and positive electrode intermediate member 24 can be substantially identical with those of the negative electrode connecting conductive members 25A and negative electrode intermediate member 25, and moreover since the resistance welding methods in both cases are substantially similar, the descriptions below use the positive electrode plate items as representative examples.

First of all, the positive electrode substrate exposed portions 14 of the flattened wound electrode assembly 11 - which had been obtained by displacing the positive electrode plates and negative electrode plates so that the aluminum foil exposed portions of the positive electrode plates did not overlie the active material layer of one of the opposed electrodes, and the copper foil exposed portions of the negative electrode plates did not overlie the active material layer of the other opposed electrode, then winding the electrode plates with polyethylene porous separators interposed therebetween - were split into two groups, one on either side from the central portion of the winding, and each group of positive electrode substrate exposed portions 14 was bundled centered on 1/4 of the electrode assembly thickness. Then the positive electrode collector members 16 and the positive electrode intermediate member 24 having positive electrode connecting conductive members 24A are inserted between the two split groups of positive electrode substrate exposed portions 14, with the positive electrode collector members 16 being inserted onto the two outermost surfaces of the positive electrode substrate exposed portions 14 and the positive electrode intermediate member 24 being inserted into the inner periphery thereof, in such a manner that the truncated cone shaped protrusions 24b on both ends of the positive electrode connecting conductive member 24A each contact against the positive electrode substrate exposed portions 14. The thickness of the aluminum foil bundle in each group is approximately 660 µm, and the total number of stacked foils is 88 (44 in each group). The positive electrode collector members 16 are fabricated by punching and bend-processing, etc., an 0.8-mm thick aluminum sheet. Note that the positive electrode collector members 16 may alternatively be fabricated by casting, etc., from aluminum sheet.

There follows an explication, using Fig. 2, of the shape of the positive electrode connecting conductive members 24A held by the positive electrode intermediate member 24 in the First Embodiment. In these positive electrode connecting conductive members 24A, a protrusion 24b with, e.g., a truncated cone shape is formed on each of two opposed faces 24e of the cylindrical columnar main body 24a. In the central portion of this truncated cone-shaped protrusion 24b there is formed an aperture 24c extending from the tip into the interior of the cylindrical columnar main body 24a. Angled portions 24f are formed between the two opposed faces 24e and the side surfaces of the cylindrical columnar main body 24a.

It is desirable that the height H of the truncated cone-shaped protrusion 24b be comparable with that of protrusions (projections) that are ordinarily formed on resistance welding members, that is, several mm or so. As regards the depth D of the aperture 24c, which in the present example is larger than the height of the truncated cone-shaped protrusion 24b, the aperture 24c will preferably be formed from the face 24e, where the protrusion 24b is formed, of the cylindrical columnar main body 24a, as far as a position located inward to a distance less than the height H of the protrusion 24b (with the depth D of the aperture 24c being less than 2H), or more preferably, as far as a position located inward to a distance less than 1/2 of the height H of the protrusion 24b from the surface of the cylindrical columnar main body 24a where the protrusion 24b is provided (with the depth D of the aperture 24c being less than 3/2 H).

It is desirable that the diameter and length of the cylindrical columnar main body 24a be on the order of three mm to several tens of mm, though these dimensions will vary with the flattened wound electrode assembly 11, outer can 12, and other parts (see Fig. 1). Note that although the shape of the main body 24a of the positive electrode connecting conductive members 24A is described here as cylindrical columnar, any desired shape that has the form of a metallic block, such as square columnar or elliptical columnar can be used. Also, as the material for forming the positive electrode connecting conductive members 24A, copper, copper alloy, aluminum, aluminum alloy, tungsten, molybdenum, or the like, can be used. Furthermore, variants of such items constituted of such metals can be used, by for example applying nickel plating to the protrusion 24b, or changing the material of the protrusion 24b and its base area to tungsten or molybdenum, which promotes the emission of heat, and joining it by brazing, for example, to the main body 24a of the positive electrode connecting conductive members 24A constituted of copper, copper alloy, aluminum, or aluminum alloy.

Note that in the First Embodiment, there are a plurality of (e.g., two) positive electrode connecting conductive members 24A, which are held integrally by the positive electrode intermediate member 24 that is made of resin material. The positive electrode intermediate member 24 can be made of synthetic resin. In such a case, the plurality of positive electrode connecting conductive members 24A are held in such a manner as all to be parallel to each other. The shape of the positive electrode intermediate member 24 can take any square columnar, elliptical columnar, or like form, that is desired, but will preferably have a horizontally long square columnar form in order to be stably positioned and fixed in the positive electrode substrate exposed portions 14 split into two groups. However, the angled portions of the positive electrode intermediate member 24 will preferably be chamfered, so that even if they come into contact with the pliable positive electrode substrate exposed portions 14, the positive electrode substrate exposed portions 14 will not be scratched, deformed or otherwise damaged. It is desirable that such chamfered portions include at least the portions that are inserted into the two split groups of positive electrode substrate exposed portions 14.

The length w of the square columnar positive electrode intermediate member 24 will vary with the size of the prismatic nonaqueous electrolyte secondary battery, but can be on the order of 20 mm to several tens of mm. As for the width h, although it is desirable that this be roughly the same as the height of the positive electrode connecting conductive members 24A, but it will suffice if at least the two ends of the positive electrode connecting conductive members 24A that will become welds are exposed. Note that the two ends of the positive electrode connecting conductive members 24A will preferably protrude from the surface of the positive electrode intermediate member 24, but that they do not necessarily need to do so. With such a structure, the positive electrode connecting conductive members 24A will be held by the positive electrode intermediate member 24, and the positive electrode intermediate member 24 will be disposed in a stably positioned state between the two split groups of positive electrode substrate exposed portions 14.

Next, as shown in Fig. 3, the flattened wound electrode assembly 11, with the positive electrode collector members 16 and the positive electrode intermediate member 24 holding the positive electrode connecting conductive members 24A disposed therein, is disposed between pairs of resistance welding electrode rods 31 and 32 above and below, and the pairs of resistance welding electrode rods 31 and 32 are each brought into contact with one of the positive electrode collector members 16, which are disposed on the outermost two surfaces of the positive electrode substrate exposed portions 14. Then an appropriate degree of pressure is applied between the pairs of resistance welding electrode rods 31 and 32, and resistance welding is performed under particular predetermined conditions.

In this resistance welding, the positive electrode intermediate member 24 is disposed in a stably positioned state between the two split groups of positive electrode substrate exposed portions 14, and so it is possible, using just one set of pairs of resistance welding electrode rods 31 and 32, to resistance-weld a plurality of positive electrode connecting conductive member 24A portions one by one, or, using multiple sets of pairs of resistance welding electrode rods 31 and 32, to resistance-weld a plurality of positive electrode connecting conductive member 24A portions two or more at a time. With this positive electrode intermediate member 24 being used in the First Embodiment, the dimensional precision between the connecting conductive members 24A and the electrode rods 31 and 32 is enhanced, which means that the resistance welding can be done in an accurate and stable state, and variation in the welding strength will be curbed.

Note that because an aperture 24c is formed in the protrusion 24b of the positive electrode connecting conductive members 24A in the First Embodiment, the current will readily concentrate at the tip of the protrusion 24b and furthermore the tip of the protrusion 24b will readily bite into the positive electrode substrate exposed portions 14. Thus, the weldability is improved over the case where no aperture 24c is formed. Moreover, the resistance welding is carried out with the pressure being applied so that the tip of the protrusion 24b is semi-crushed and the portion of the protrusion 24b that contacts with the positive electrode substrate exposed portions 14 changes from annular to circular, then it will be possible to perform the welding more stably.

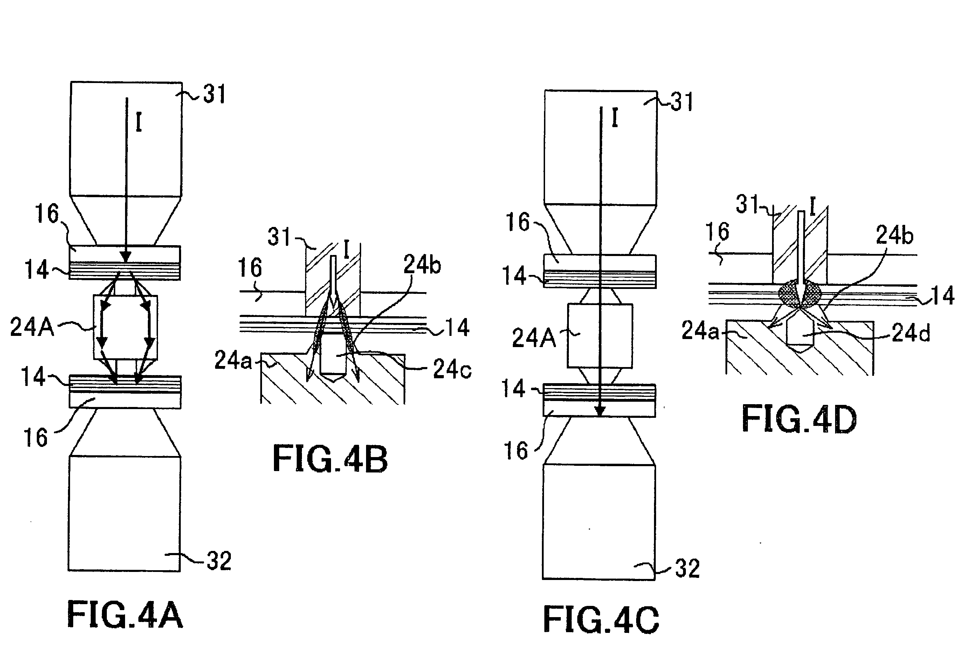

Thus, it is preferable that, for example as shown in Fig. 4D, the shape of the protrusion 24b of the positive electrode connecting conductive members 24A be made such that the tip of the protrusion 24b is semi-crushed and the portion of the protrusion 24b that contacts with the positive electrode substrate exposed portions 14 changes from annular to circular. In such a case, a hollow 24d will be formed in the interior of the protrusion 24b. This will make the portion of the protrusion 24b that contacts with the positive electrode substrate exposed portions 14 into a circular shape, thereby promoting the emission of heat from the center of the positive electrode connecting conductive member 24A, enabling further stabilized welding.

Note that whether the portion of the protrusion 24b that contacts with the positive electrode substrate exposed portions 14 is semi-crushed or is annular is known to depend mainly on the pressure applied during welding. The tendency is for the protrusion tip to be annular when the welding applied pressure is weak, and to be semi-crushed when the welding applied pressure is strong. Besides that, it is considered that the larger the height of the protrusion 24b and the larger the depth of the aperture 24c, the more readily will the portion be semi-crushed; when the aperture's depth is small, the tip of the protrusion 24b will more readily retain its annular shape and be in a condition to bite into the substrate exposed portions.

During the resistance welding, it is preferable that the central axes of the pairs of resistance welding electrode rods 31 and 32 coincide with those of the positive electrode connecting conductive members 24A, and that the positive electrode connecting conductive members 24A be held in such a manner that they will not come out of position due to the pressure application, etc. In addition, a semiconductor type welding power source using commonly-known transistors or the like can be used as the resistance welding machine.

There follows an explanation, using Fig. 4, of the reasons for the difference arising in the heat-up conditions when the portion of the protrusion 24b that contacts with the positive electrode substrate exposed portions 14 is annular and when it is circular. Fig. 4A is a view showing the route by which the resistance welding current flows in the case where the portion of the protrusion 24b that contacts with the positive electrode substrate exposed portions 14 is annular, Fig. 4B is a view showing the portions in Fig. 4A where heat-up is intense, Fig. 4C is a view showing the route by which the resistance welding current flows in the case where the portion of the protrusion 24b that contacts with the positive electrode substrate exposed portions 14 is circular, and Fig. 4D is a view showing the portions in Fig. 4C where heat-up is intense.

Since the current flows through the places with smallest resistance, the portion of the interior of the resistance welding electrode rods 31 and 32 where the current flows the most is its center. In the case where the portion of the protrusion 24b that contacts with the positive electrode substrate exposed portions 14 is annular, the welding current I will, for example, flow from the upper resistance welding electrode rod 31 through the upper positive electrode collector member 16 and positive electrode substrate exposed portions 14 into the annular tip of the upper protrusion 24b of the positive electrode connecting conductive member 24A, where the current is split up into an annular stream, which flows through the interior of the main body 24a of the positive electrode connecting conductive member 24A and into the annular tip of the lower protrusion 24b of the positive electrode connecting conductive member 24A, where the current is focused, and then flows though the lower positive electrode substrate exposed portions 14 and positive electrode collector member 16 into the lower resistance welding electrode rod 32, as shown in Fig. 4A. Therefore, in the case where the portion of the protrusions 24b that contacts with the positive electrode substrate exposed portions 14 is annular, the current will not flow in the center of the protrusions 24b, and as a result, the welding start points will occur in an annular configuration, and there will be multiple start points as shown in Fig. 4B.

By contrast, in the case where the portion of the protrusions 24b that contacts with the positive electrode substrate exposed portions 14 has been semi-crushed and become circular, a hollow 24d will be formed in the interior of the protrusion 24b, and as a result, the welding current I will, for example, flow from the upper resistance welding electrode rod 31 through the upper positive electrode collector member 16 and positive electrode substrate exposed portions 14 and into the center of the circular tip of the upper protrusion 24b of the positive electrode connecting conductive member 24A, where the current is split up into an annular stream, which flows through the interior of the main body 24a of the positive electrode connecting conductive member 24A and into the center of the circular tip of the lower protrusion 24b of the positive electrode connecting conductive member 24A, where the current is focused, and then flows though the lower positive electrode substrate exposed portions 14 and positive electrode collector member 16 into the lower resistance welding electrode rod 32, as shown in Fig. 4C.

In this example, at the protrusion 24b portion the welding current I avoids the hollow 24d and is split up into an annular stream, but since the hollow 24d is present in the central interior of the circular tip, the heat absorption that accompanies the melting of metal is lessened, and so the area around the center of the circular tip of the protrusion 24b becomes the place that heats up most readily. Therefore, in the case where the portion of the protrusions 24b that contacts with the positive electrode substrate exposed portions 14 is circular, the current will be focused in the center of the circular tip of the protrusion 24b, and so the shape of the portion that heats up intensely due to the welding current I will be spherical, as shown in Fig. 4D, which means that the welded state will be more stable and moreover the welding strength will be high.

Note that the foregoing First Embodiment described an example in which the positive electrode connecting conductive members 24A have a columnar main body 24a and truncated cone-shaped protrusions 24b in which apertures 24c are formed. However, with the invention it is possible to use protrusions 24b in which no apertures are formed, or that are truncated pyramid-shaped, more precisely, truncated triangular or quadrangular truncated pyramid-shaped, or even multiangular truncated pyramid-shaped. A hemispherical item might also be used.

In the case where no apertures are formed in the protrusions 24b, the effect of the protrusions 24b will be similar to that of the long-used projections during resistance welding. Even in this case, however, it will be possible to carry out resistance welding satisfactorily between the positive electrode collector member 16, the stacked plurality of positive electrode substrate exposed portions 14 and the positive electrode connecting conductive members 24A. Where the depth of the apertures 24c formed in the protrusions 24b is small, the effects arising during resistance welding will gradually approach those when no apertures are formed in the protrusions 24b.

Although an example has been described in which items having a circular main body 24a were used as the positive electrode connecting conductive members 24A, any item having the form of a metallic block, such as square cylindrical, elliptical cylindrical, or the like shape, will be suitable, and it will further be possible to use an item in which the aperture 24c (see Fig. 2) penetrates fully through the main body 24a. Particularly in the case where the aperture 24c penetrates fully through the main body 24a, the main body 24a of the positive electrode connecting conductive members 24A will be cylindrical, but in such a case the main body 24a can be made to also serve as protrusions by forming the two ends thereof or leaving them projecting. In such a case where the main body 24a of the positive electrode connecting conductive members 24A is cylindrical, it will be advisable to make the cylindrical portion thicker to a certain degree, in order to render the electrical resistance small.

The foregoing First Embodiment described the case where the stacked plurality of positive electrode substrate exposed portions 14 are split into two groups and resistance welding is performed using the positive electrode collector members 16 and the positive electrode connecting conductive members 24A, but alternatively the positive electrode connecting conductive members 24A could be made to also serve as positive electrode collector members, and be connected to the positive electrode terminal 17. In such a case it will suffice to employ, in place of the positive electrode collector members used in the First Embodiment, a welding receiving member constituted of thin sheet material formed from the same material as the positive electrode connecting conductive members 24A.

### Second to Fourth Embodiments

The First Embodiment described, for the positive electrode connecting conductive members 24A that are held by the positive electrode intermediate member 24, an item in which a protrusion 24b that is, e.g., truncated pyramid-shaped, is formed on each of two opposed faces 24e of the cylindrical columnar main body 24a, as shown in Fig. 2. Thus, when the main body 24a is cylindrical columnar, angled portions 24f will be formed between the two opposed faces 24e and side faces of the cylindrical columnar main body 24a. Therefore, as shown in Fig. 3, when the positive electrode intermediate member 24 holding the positive electrode connecting conductive members 24A is disposed inside the two split groups of stacked positive electrode substrate exposed portions 14, so that each of the truncated pyramid-shaped protrusions 24b on the two ends of the positive electrode connecting conductive members 24A contacts against the stacked positive electrode substrate exposed portions 14, then if the angled portions 24f protrude exposed from the surface of the positive electrode intermediate member 24, the exposed angled portions 24f will more readily contact with the stacked positive electrode substrate exposed portions 14, and the positive electrode substrate exposed portions 14 will readily deform.

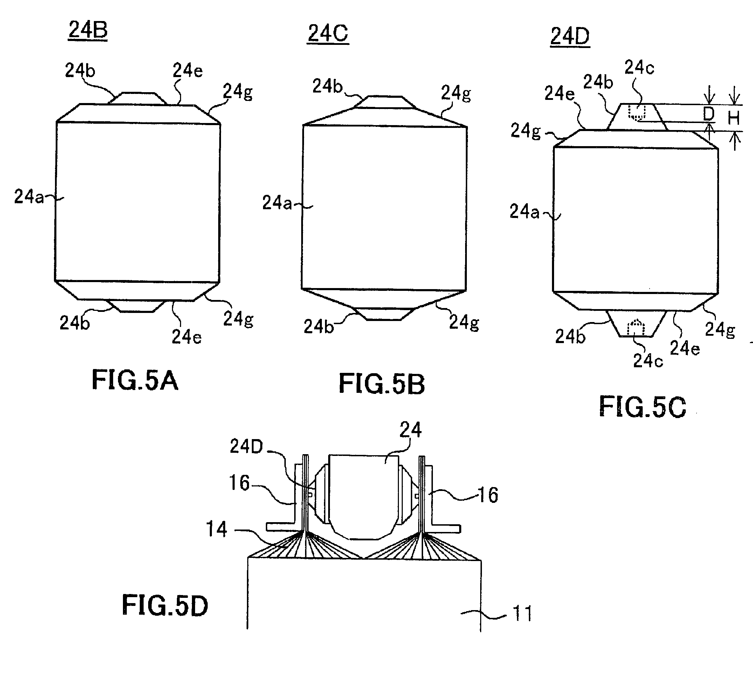

Accordingly, as the positive electrode connecting conductive member 24B of the Second Embodiment, chamfered surfaces 24g formed for the angled portions 24f between the two opposed faces 24e and side faces of the cylindrical columnar main body 24a of the First Embodiment. This positive electrode connecting conductive member 24B of the Second Embodiment will now be described using Fig. 5A. Note that Fig. 5A is a front view of a positive electrode connecting conductive member 24 of the Second Embodiment.

With the positive electrode connecting conductive member 24B of the Second Embodiment, which has chamfered surfaces 24g as mentioned above, even if the chamfered surfaces 24g protrude from the surface of the positive electrode intermediate member 24, when the positive electrode intermediate member 24 holding the positive electrode connecting conductive members 24B is disposed inside the two split groups of stacked positive electrode substrate exposed portions 14, so that each of the truncated cone-shaped protrusions 24b on the two ends of the positive electrode connecting conductive members 24B contacts against the stacked positive electrode substrate exposed portions 14, little damage will be caused to the stacked positive electrode substrate exposed portions 14, and insertion as far as the position for welding to the positive electrode substrate exposed portions 14 will be easy. Hence, the weldability will be improved.

Either curved surfaces or planes can be employed for the chamfered surfaces 24g of the positive electrode connecting conductive members 24B of the Second Embodiment. However, if the chamfered surfaces 24g are made into planes, then the chamfered surfaces 24g and the surfaces on which the protrusion 24b is formed will, of necessity, form obtuse angles with respect to the positive electrode substrate exposed portions 14, and so the positive electrode substrate exposed portions 14 and the protrusions 24b will readily come into contact when the positive electrode connecting conductive members 24B is brought into contact with the stacked positive electrode substrate exposed portions 14, with the result that the weldability will be improved.

As regards the positive electrode connecting conductive members 24C of the Third Embodiment, as shown in Fig. 5B, these positive electrode connecting conductive members 24C exhibit a form such that the chamfered surfaces 24g are extended as far as the portion where the protrusion 24b is formed, and the faces 24e constituted of the two mutually parallel planar faces on the main body 24a of the positive electrode connecting conductive members 24B of the Second Embodiment are absent. These positive electrode connecting conductive members 24C of the Third Embodiment will also yield fairly good resistance welding advantages.

However, the configuration with the two faces 24e where the protrusion 24b is provided both being exposed, as in the positive electrode connecting conductive members 24B of the Second Embodiment is used, more precisely, the configuration whereby two mutually parallel planar faces are formed on the main body 24a of the positive electrode connecting conductive members 24B, is more preferable, because when the pressure is applied to the resistance welding electrode during resistance welding, the positive electrode connecting conductive members 24B will not be prone to deform, and part of the protrusion 24b that melts and deforms, or part of the positive electrode substrate exposed portions 14 that melt, during resistance welding, will dwell on these surfaces 24e and be inhibited from flowing out toward the sides of the positive electrode connecting conductive members 24B, and moreover, since the faces 24e will be the faces that contact with the positive electrode substrate exposed portions 14, the positions of the positive electrode connecting conductive members 24B will be stabilized, and it will be possible to obtain higher-reliability resistance welds.

Furthermore, the positive electrode connecting conductive members 24D of the Fourth Embodiment are the positive electrode connecting conductive members 24B of the Second Embodiment, but provided, in the central portion of the protrusions 24b, with apertures 24c having a depth D that is smaller than the height H of the protrusions 24b.

Fig. 5D is a schematic side view that illustrates resistance welding that was carried out using , the positive electrode connecting conductive members 24D of the Fourth Embodiment in order to show that when chamfered faces 24g are formed, as in the positive electrode connecting conductive members 24B to 24D of the Second to Fourth Embodiments, the positive electrode intermediate member 24 can more readily be inserted between the two split groups of positive electrode substrate exposed portions 14. It will be seen from Fig. 5D that even with the positive electrode connecting conductive members 24D protruding from the surface of the positive electrode intermediate member 24, the positive electrode substrate exposed portions 14 will not be prone to deform geometrically. Fig. 5D also illustrates the case where the angled portions on the side of the positive electrode intermediate member 24 that is inserted between the positive electrode substrate exposed portions 14 are chamfered. It will also be seen from Fig. 5D that due to the shape of the positive electrode intermediate member 24, the positive electrode substrate exposed portions 14 will not be prone to deform geometrically even when the positive electrode intermediate member 24 is inserted between the two split groups of positive electrode substrate exposed portions 14.

### Fifth and Sixth Embodiments

In the First to Fourth Embodiments above, examples were described in which the positive electrode substrate exposed portions 14 of the flattened wound electrode assembly 11 are split into two groups, one on each side relative to the winding center portion, each such group is bundled together, positive electrode collector members 16 are placed against the two outermost surfaces of the positive electrode substrate exposed portions 14, a positive electrode intermediate member 24 having positive electrode connecting conductive members 24A, 24B, 24C or 24D is inserted between the two split groups of positive electrode substrate exposed portions 14, and resistance welding is performed by bringing pairs of resistance welding electrodes 31, 32 into contact with both surfaces of the positive electrode collector members 16 (see Fig. 3). However, with the present invention, it is not necessarily a necessary condition to place positive electrode collector members 16 connected to the positive electrode terminal 17 against both of the outermost surfaces of the two split groups of positive electrode substrate exposed portions 14; it will suffice to perform resistance welding with positive electrode collector members 16 placed against at least one surface of the two split groups of positive electrode substrate exposed portions 14.

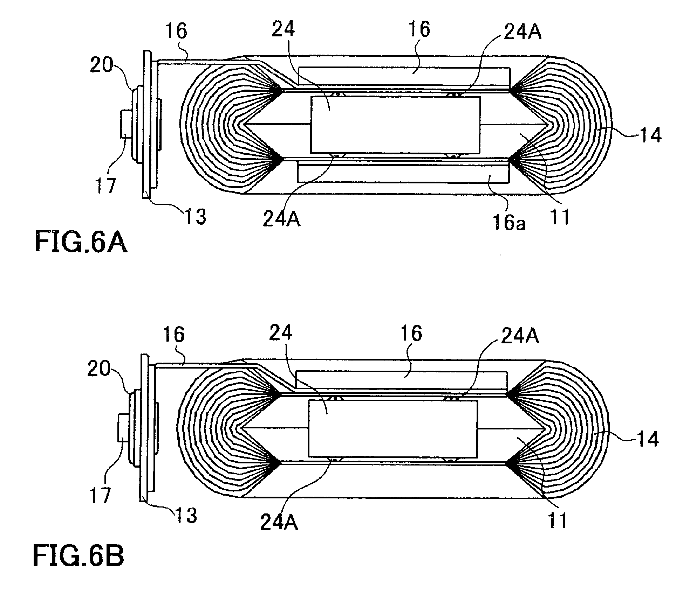

There follows a description, using Fig. 6, of the post-welding disposition of the positive electrode connecting conductive member 24 portion in the Fifth and Sixth Embodiments, in which, as mentioned above, positive electrode collector members 16 connected to the positive electrode terminal 17 are placed against at least one surface of the two split groups of positive electrode substrate exposed portions 14. Note that Fig. 6A is a side view showing the post-welding disposition of the positive electrode connecting conductive member 24 portion in the Fifth Embodiment, and Fig. 6B is a side view showing the post-welding disposition of the positive electrode connecting conductive member 24 portion in the Sixth Embodiment. The descriptions of the Fifth and Sixth Embodiments use positive electrode intermediate members 24 that have the same positive electrode connecting conductive members 24A as the items used in the First Embodiment.

In the Fifth Embodiment, as shown in Fig. 6A, a positive electrode collector member 16 connected to the positive electrode terminal 17 is disposed so as to contact against one outermost surface of the two split groups of positive electrode substrate exposed portions 14, a positive electrode collection receiving member 16a is disposed so as to contact against the other outermost surface of the two split groups of positive electrode substrate exposed portions 14, and resistance welding is performed by placing pairs of resistance welding electrodes into contact with the positive electrode collector member 16 and the positive electrode collection receiving member 16a. In this Fifth Embodiment, the positive electrode collection receiving member 16a is not directly connected to the positive electrode terminal 17, but fulfills the role of receiving one of the pairs of resistance welding electrodes during resistance welding. The meaning of "collector member" as used herein includes such a "collection receiving member". Disposing collector members on both the outermost surfaces of the two split groups of positive electrode substrate exposed portions 14 enables resistance welding to be performed in a physically stable state.

In the Sixth Embodiment, as shown in Fig. 6B, a positive electrode collector member 16 is disposed so as to contact against one outermost surface of the two split groups of positive electrode substrate exposed portions 14, nothing is provided on the other outermost surface of the two split groups of positive electrode substrate exposed portions 14, and resistance welding is performed by placing pairs of resistance welding electrodes into contact with the positive electrode collector member 16 and the other outermost surface of the two split groups of positive electrode substrate exposed portions 14. More precisely, in the Sixth Embodiment, one of the pair of resistance welding electrodes is placed directly into contact with the other outermost surface of the two split groups of positive electrode substrate exposed portions 14 in order to perform resistance welding. With a configuration such as in the Sixth Embodiment, fairly good resistance welding can be performed, but since there is a possibility of fusion occurring between the resistance welding electrodes and the other outermost surface of the positive electrode substrate exposed portions 14, it is preferable that a positive electrode collector member 16 or a collection receiving member 16a be disposed on the other outermost surface of the positive electrode substrate exposed portions 14, as in the First to Fifth Embodiments.

### Seventh to Tenth Embodiments

In the First Embodiment, an example was described that used a positive electrode intermediate member 24 made of synthetic resin and having a rectangular parallelepiped shape. However, since any shape that can hold the connecting conductive members 24A stably can be used to implement the invention, the shape of the positive electrode intermediate member 24 is not limited to a rectangular parallelepiped. For example, cutout portions 24x could be formed in between the positive electrode connecting conductive members 24A as in the positive electrode intermediate member 24₁ of the Seventh Embodiment shown in Fig. 7A, or through holes 24y could be formed longitudinally as in the positive electrode intermediate member 24₂ of the Eighth Embodiment shown in Fig. 7B, or apertures 24z could be formed in between the positive electrode connecting conductive members 24A as in the positive electrode intermediate member 24₃ of the Ninth Embodiment shown in Fig. 7C. If such structures are employed, the cutout portions 24x, through holes 24y, apertures 24z, or the like will act as gas venting routes, so that any gas that may be generated in the electrode assembly interior if abnormality occurs in the battery can easily be expelled to the exterior of the electrode assembly, and since the pressure -reduction type current interruption mechanism, gas exhaust valve, and so forth, with which a prismatic sealed battery is normally equipped will be activated stably, safety can be secured, and a high-reliability prismatic sealed secondary battery can be manufactured.

Alternatively, as in the positive electrode intermediate member 24₄ of the Tenth Embodiment shown in Figs. 7D and 7E, cutout portions 24x' could be formed, one on each of the pair of opposed side faces in the positive electrode intermediate member 24₄, so as to be parallel in the insertion direction of the positive electrode intermediate member 24₄, or more precisely, in the direction in which the positive electrode substrate exposed portions 14 protrude from the wound electrode assembly 11. If such a structure is employed, it will be possible to hold the positive electrode intermediate member 24₄ more stably during the manufacturing process, and to render the positioning of the positive electrode intermediate member 24₄ and the wound electrode assembly 11 more accurate. More precisely, when the positive electrode intermediate member 24₄ is inserted between the two split groups of positive electrode substrate exposed portions 14, a positioning jig or arm 27 such as shown in Figs. 7F and 7G will clasp the positive electrode intermediate member 24₄ via the cutout portions 24x', as shown in Fig. 7H, and then resistance welding will be performed with the positive electrode intermediate member 24₄ clasped by the positioning jig or arm 27 as shown in Figs. 7L to 7N. Thereby, resistance welding of the collectors 16 with the positive electrode intermediate member 24₄ fixed in a more stable state will be enabled. Note that the structural components in Figs. 7L to 7N that are similar to those in the First Embodiment shown in Figs. 1 to 3 are assigned the same reference numerals and detailed descriptions thereof are omitted.

Because the cutout portions 24x' are formed so as to be parallel in the insertion direction of the positive electrode intermediate member 24₄, the clasping by the positioning jig or arm 27, and the removal of the positioning jig or arm 27 after resistance welding has been performed, will proceed more smoothly.

As a result, the positioning of the positive electrode intermediate member 24₄ and the positive electrode substrate exposed portions 14 will be more accurate, and positioning error and tilting, etc., due to the pressure applied during resistance welding of the collectors 16 will be prevented, so that a prismatic sealed secondary battery with improved reliability in resistance welding of the collector 16 and improved product yield can be obtained. In addition, since both the positive electrode intermediate member 24₄ and the positioning jig or arm 27 are fixed firmly in place simply by fitting together, the manufacturing equipment can be simplified.

Note that if, in the foregoing Tenth Embodiment, cutout portions 24x' are provided on faces that are not opposed to the positive electrode substrate exposed portions 14, that is, on faces other than those where the positive electrode connecting conductive members protrude, then interference of the positioning jig or arm 27 with the positive electrode substrate exposed portions 14 during positioning of the positive electrode intermediate member 24₄ and resistance welding of the collector 16 will be curbed.

If, besides the cutout portions 24x provided in parallel in the insertion direction of the positive electrode intermediate member, a cutout portion 24x" is provided on the face on the opposite side to the face that will be on the wound electrode assembly side in the foregoing Tenth Embodiment, as in the variant examples shown in Figs. 7J and 7K, then clasping by the positive electrode intermediate member jig or arm 27' will be more stable.

### Eleventh Embodiment

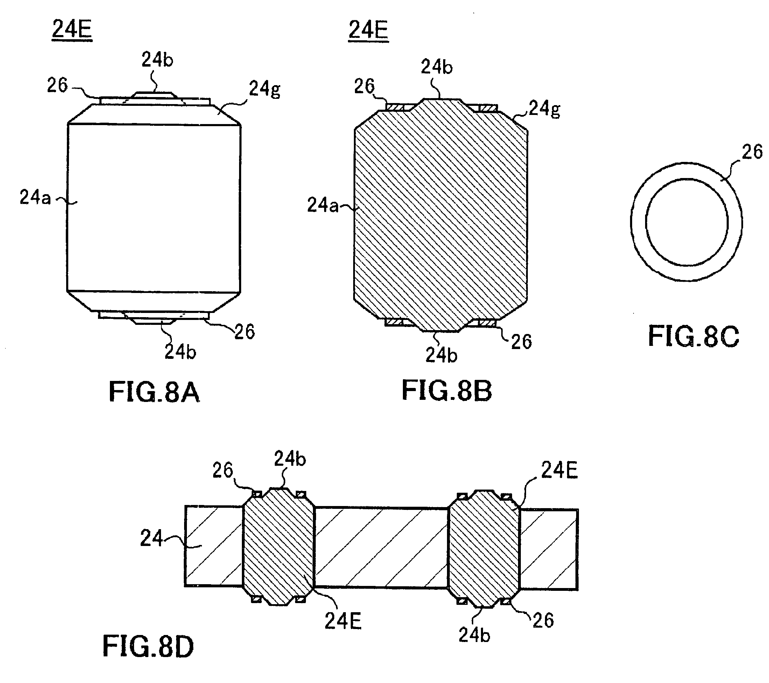

The positive electrode connecting conductive members 24E of the Eleventh Embodiment will now be described using Fig. 8. Note that Fig. 8A is a front view of a positive electrode connecting conductive member in the Eleventh Embodiment, Fig. 8B is a longitudinal sectional view through Fig. 8A, Fig. 8C is a top view of the ring-shaped insulating seal material, and Fig. 8D is a longitudinal sectional view of the positive electrode intermediate member in the Eleventh Embodiment.

The positive electrode connecting conductive members 24E of the Eleventh Embodiment is the positive electrode connecting conductive members 24B of the Second Embodiment shown in Fig. 5A, but with insulating seal material 26, which is formed from ring-shaped insulative thermally melt-bonding resin, disposed around the truncated cone-shaped protrusion 24b. The height of this insulating seal material 26 is smaller than the height H of the truncated cone-shaped protrusion 24b.

Chamfered surfaces 24g are formed in the positive electrode connecting conductive members 24E of the Eleventh Embodiment, and so when the positive electrode connecting conductive members 24E are disposed inside the two split groups of stacked positive electrode substrate exposed portions 14 so that each of the truncated cone-shaped protrusions 24b on the two ends of the positive electrode connecting conductive members 24E contacts against the stacked positive electrode substrate exposed portions 14, little damage will be caused to the stacked positive electrode substrate exposed portions 14, and insertion as far as the position for welding to the positive electrode substrate exposed portions 14 will be easy. Hence, the weldability will be improved.

In the positive electrode connecting conductive members 24E of the Eleventh Embodiment, insulating seal materials 26 which are formed from ring-shaped insulative thermally melt-bonding resin are disposed around the truncated cone-shaped protrusions 24b on the two ends. During resistance welding, the stacked positive electrode substrate exposed portions 14 are pushed by the resistance welding electrodes toward the positive electrode connecting conductive members 24E, and so the protrusions 24b of the positive electrode connecting conductive members 24E bite into the stacked positive electrode substrate exposed portions 14, thus contacting with the stacked positive electrode substrate exposed portions 14. With insulating seal materials 26 disposed in a ring shape around the protrusions 24b of the positive electrode connecting conductive members 24E as mentioned above, any spattered high-temperature dust that may occur during resistance welding can be blocked by the insulating seal materials 26 and captured in the interior of the insulating seal materials 26 or between the protrusions 24b and the insulating seal materials 26.

Moreover, in the positive electrode connecting conductive members 24E of the Eleventh Embodiment, because the insulating seal materials 26 are formed from insulative thermally melt-bonding resin, any spattered high-temperature dust that occurs during resistance welding will partially melt the solid insulative thermally melt-bonding resin and thereby be deprived of heat, rapidly cool, and fall in temperature, with the result that it will easily be captured inside the insulating seal materials 26 constituted of solid insulative thermally melt-bonding resin. Note that since, during resistance welding, the duration for which the current is passed is short and moreover the area over which the current flows is narrow, it will seldom occur that all of the insulating seal materials 26 constituted of insulative thermally melt-bonding resin will melt at the same time. Therefore, it will seldom occur that spattered dust that occurs during resistance welding will disperse from the insulating seal materials 26 and enter into the interior of the flattened electrode assembly. Hence, a sealed battery can be obtained that has lower occurrence of internal short-circuits and higher reliability.

Note that the insulative thermally melt-bonding resin will preferably have a melting temperature of 70 to 150°C and dissolving temperature of 200°C or higher, and will preferably further have chemical resistance with regard to electrolyte and the like. For example, a rubber-based seal material, acid-denatured polypropylene, or polyolefin-based thermally melt-bonding resin may be used. Furthermore, the insulating seal material may be insulating tape with adhesive, for which polyimide tape, polypropylene tape, polyphenylene sulfide tape, or the like can be used. Moreover, the whole material may consist of insulative thermally melt-bonding resin, or it may have a multilayer structure that includes insulative thermally melt-bonding resin layers.

Note that although the descriptions of the First to Eleventh Embodiments above concerned the positive electrode part, the negative electrode part employs the same structure — except for different physical properties of the materials of the negative electrode substrate exposed portions 15, negative electrode collector members 18, negative electrode intermediate member 25, negative electrode connecting conductive members 25A, and negative electrode collection receiving member (not shown in the figures), and therefore, yields substantially the same effects and advantages. Furthermore, the invention does not necessarily have to be employed in both the positive electrode part and the negative electrode part, and may be applied to the positive electrode part alone or to the negative electrode part alone.

In the manufacture of a sealed battery of the invention it is possible to use positive electrode connecting conductive members and negative electrode connecting conductive members with protrusions of differing shapes. Differing metallic materials are used for the positive electrode substrates and the negative electrode substrates of an ordinary sealed battery. For example, in a lithium ion secondary battery, aluminum or aluminum alloy is used for the positive electrode substrates and copper or copper alloy is used for the negative electrode substrates. Because copper and copper alloy have low electrical resistance compared with aluminum and aluminum alloy, it is more difficult to resistance-weld the negative electrode substrate exposed portions than to resistance-weld the positive electrode substrate exposed portions, and hard-to-melt portions are prone to occur in the stacked negative electrode substrate exposed portion interior.

In such a case, it will be desirable, in order to concentrate the electric current and render the resistance welding easy to perform, to use protrusions with apertures formed therein for the shape of the protrusions of the negative electrode connecting conductive members that are used between the negative electrode substrate exposed portions, while for the shape of the protrusions of the positive electrode connecting conductive members that are used between the positive electrode substrate exposed portions, it will be desirable to use protrusions without apertures formed therein, so that the resistance welding will proceed easily and the positive electrode connecting conductive members will be less liable to deform.

The foregoing embodiments and figures set forth examples in which, for simplicity of description, welding is carried out using one intermediate member, which holds two connecting conductive members, for the substrate exposed portions of each electrode. However, the number of connecting conductive members can of course be three or more, and can be determined appropriately in accordance with the size, required output, and other characteristics of the battery.

## Claims

1. A prismatic sealed secondary battery comprising:
an electrode assembly that has stacked or wound positive electrode substrate exposed portions and negative electrode substrate exposed portions;
a collector member that is electrically joined to the positive electrode substrate exposed portions; and
a collector member that is electrically joined to the negative electrode substrate exposed portions,
the positive electrode substrate exposed portions or the negative electrode substrate exposed portions, or both, being split into two groups, and therebetween is disposed an intermediate member that is made of resin material and holds a plurality of connective conducting members,
the collector member for the substrate exposed portions that are split into two groups being disposed on at least one of the outermost surfaces of the two split groups of substrate exposed portions, and being electrically joined by a resistance welding method to the two split groups of substrate exposed portions, together with the plurality of connecting conductive members of the intermediate member.

2. The prismatic sealed secondary battery according to claim 1, wherein the intermediate member is provided with a hole or cutout, or both.

3. The prismatic sealed secondary battery according to claim 2, wherein the intermediate member is provided, on at least one pair of opposed sides, with cutouts parallel to an insertion direction of the intermediate member.

4. The prismatic sealed secondary battery according to claim 3, wherein the cutouts are provided on surfaces that are not opposed to the positive electrode substrate exposed portions or the negative electrode substrate exposed portions.

5. The prismatic sealed secondary battery according to any one of claims 1 to 4, wherein angled portions of the intermediate member are chamfered.

6. The prismatic sealed secondary battery according to any one of claims 1. to 5, wherein the resin material portion of the intermediate member protruding, in the extension direction of the substrate exposed portions that are split into two groups, beyond the ends of the substrate exposed portions that are split into two groups and the ends of the collector member to the prismatic outer can.

7. The prismatic sealed secondary battery according to any one of claims 1 to 6, wherein the connecting conductive members are block-shaped or columnar body-shaped.

8. The prismatic sealed secondary battery according to claim 7, wherein angled portions of two mutually opposed surfaces of the block shapes or columnar body shapes are chamfered.

9. The prismatic sealed secondary battery according to claim 8, wherein the chamfered surfaces are planes.

10. A method for manufacturing a sealed battery, the method comprising:
(1) fabricating, by stacking or winding positive electrode plates and negative electrode plates with a separator interposed therebetween, a flattened electrode assembly with a plurality of stacked positive electrode substrate exposed portions formed at one end and a plurality of stacked negative electrode substrate exposed portions formed at the other end;
(2) splitting the stacked positive electrode substrate exposed portions, or negative electrode substrate exposed portions, or both, into two groups;
(3) disposing a collector member on the two outermost surfaces of the two split groups of substrate exposed portions, and disposing an intermediate member that is made of resin material and holds a plurality of connecting conductive members, between the two split groups of substrate exposed portions, in such a manner that two opposed faces of the connecting conductive members each contact with one of the two split groups of substrate exposed portions;
(4) placing pairs of resistance welding electrodes against the collector members disposed on the two outermost surfaces of the two split groups of substrate exposed portions; and
(5) carrying out resistance welding while applying pushing pressure between the pairs of resistance welding electrodes.

11. The method for manufacturing a sealed battery according to claim 10, wherein the intermediate member is provided with a hole or cutout, or both.

12. The method for manufacturing a sealed battery according to claim 10, wherein the intermediate member is provided, on at least one pair of opposed sides of the intermediate member, with cutouts parallel to an insertion direction of the intermediate member,
in step (3), while clasping the cutouts parallel to the insertion direction of the intermediate member provided on one pair of opposed sides of the intermediate member with a positioning jig, the intermediate member is located between the two split groups of substrate exposed portions, and
steps (4) and (5) are carried out while clasping the cutouts parallel to the insertion direction of the intermediate member provided on one pair of opposed sides of the intermediate member with a positioning jig.

13. The method for manufacturing a sealed battery according to any one of claims 10 to 12, wherein the intermediate member has chamfered angled portions.

14. The method for manufacturing a sealed battery according to any one of claims 10 to 13, wherein the connecting conductive members are block-shaped or columnar body-shaped items ends of which project from the intermediate member.

15. The method for manufacturing a sealed battery according to claim 14, wherein the connecting conductive members have mutually parallel planar portions provided on two opposed surfaces at the front of the block or columnar body and have chamfered angled portions.

16. The method for manufacturing a sealed battery according to claim 15, wherein the chamfered portions of the connecting conductive members are planar.

17. The method for manufacturing a sealed battery according to any one of claims 10 to 16, wherein protrusions are formed on two opposed surfaces of the connecting conductive members.

18. The method for manufacturing a sealed battery according to claim 17, wherein apertures are formed in protrusions provided on two opposed surfaces of the connecting conductive members.

19. The method for manufacturing a sealed battery according to any one of claims 10 to 16, wherein apertures are formed on two opposed surfaces of the connecting conductive members.

20. The method for manufacturing a sealed battery according to claim 18 or 19, wherein the apertures penetrate fully through the connecting conductive members.

21. The method for manufacturing a sealed battery according to any one of claims 18 to 20, wherein in said step (5) the pushing pressure is applied in such a manner that the apertures are semi-crushed.

22. The method for manufacturing a sealed battery according to any one of claims 10 to 21, wherein ring-shaped insulating seal material is disposed on two opposed surfaces of the connecting conductive members to serve as the intermediate member.

23. The method for manufacturing a sealed battery according to any one of claims 10 to 22, wherein shape of the exposed portions of the connecting conductive members between the positive electrode substrate exposed portions differs from that of those between the negative electrode substrate exposed portions.

## Patentansprüche

1. Prismatische abgedichtete Sekundärbatterie mit:
einer Elektrodenanordnung, die gestapelt oder gewunden freiliegende Teile eines positiven Elektrodensubstrats und freiliegende Teile eines negativen Elektrodensubstrats aufweist,
einem Kollektorelement, das elektrisch mit den freiliegenden Teilen des positiven Elektrodensubstrats verbunden ist,
einem Kollektorelement, das elektrisch mit den freiliegenden Teilen des negativen Elektrodensubstrats verbunden ist,
wobei die freiliegenden Teile des positiven Elektrodensubstrats oder die freiliegenden Teile des negativen Elektrodensubstrats oder beide in zwei Gruppen aufgeteilt sind und wobei dazwischen ein Zwischenelement angeordnet ist, das aus Harzmaterial gefertigt ist und eine Anzahl von leitenden Verbindungselementen hält,
wobei das Kollektorelement für die freiliegenden Substratteile, die in zwei Gruppen aufgeteilt sind, auf zumindest einer der äußeren Flächen der zwei aufgeteilten Gruppen von freiliegenden Substratteilen angeordnet ist und elektrisch durch ein Widerstandsschweißverfahren mit den zwei aufgeteilten Gruppen der freiliegenden Substratteile verbunden ist, zusammen mit der Anzahl von leitenden Verbindungselementen des Zwischenelements.

2. Prismatische abgedichtete Sekundärbatterie nach Anspruch 1, wobei das Zwischenelement mit einem Loch oder einem Ausschnitt oder beidem versehen ist.

3. Prismatische abgedichtete Sekundärbatterie nach Anspruch 2, wobei das Zwischenelement auf zumindest einem Paar gegenüberliegender Seiten mit Ausschnitten versehen ist, die parallel zu einer Einfügungsrichtung des Zwischenelementes angeordnet sind.

4. Prismatische abgedichtete Sekundärbatterie nach Anspruch 3, wobei die Ausschnitte auf Oberflächen vorgesehen sind, die nicht den freiliegenden Teilen des positiven Elektrodensubstrats oder den freiliegenden Teilen des negativen Elektrodensubstrats gegenüber liegen.

5. Prismatische abgedichtete Sekundärbatterie nach einem der Ansprüche 1 bis 4, wobei gewinkelte Teile des Zwischenelementes abgeschrägt sind.

6. Prismatische abgedichtete Sekundärbatterie nach einem der Ansprüche 1 bis 5, wobei der Harzmaterialteil des Zwischenelementes in der Ausdehnungsrichtung der freiliegenden Substratteile, die in zwei Gruppen aufgeteilt sind, über die Enden der freiliegenden Substratteile, die in zwei Gruppen aufgeteilt sind, vorsteht und die Enden des Kollektorelementes zu einem prismatischen äußeren Gehäuse.

7. Prismatische abgedichtete Sekundärbatterie nach einem der Ansprüche 1 bis 6, wobei die leitenden Verbindungselemente blockförmig oder säulenkörperförmig ausgebildet sind.

8. Prismatische abgedichtete Sekundärbatterie nach Anspruch 7, wobei abgewinkelte Teile der zwei gegenüberliegenden Flächen der Blockformen oder der Säulenkörperformen abgeschrägt sind.

9. Prismatische abgedichtete Sekundärbatterie nach Anspruch 8, wobei die abgeschrägten Flächen Ebenen sind.

10. Verfahren der Herstellung einer abgedichteten Batterie, wobei das Verfahren aufweist:
(1) Herstellen, durch Stapeln oder Winden von positiven Elektrodenplatten und negativen Elektrodenplatten mit einem dazwischen angeordneten Separator, einer abgeflachten Elektrodenanordnung mit einer Anzahl von gestapelten freiliegenden Teilen eines positiven Elektrodensubstrats, die an einem Ende ausgebildet sind, und einer Anzahl von gestapelten freiliegenden Teilen eines negativen Elektrodensubstrats, die am anderen Ende ausgebildet sind,
(2) Aufteilen der freiliegenden Teile des positiven Elektrodensubstrats oder der freiliegenden Teile des negativen Elektrodensubstrats oder beider in zwei Gruppen,
(3) Anordnen eines Kollektorelements auf den beiden äußersten Oberflächen der zwei aufgeteilten Gruppen der freiliegenden Substratteile und Anordnen eines Zwischenelements, das aus Harzmaterial gefertigt ist und eine Anzahl von leitenden Verbindungselementen trägt, zwischen den beiden aufgeteilten Gruppen von freiliegenden Substratteilen derart, dass zwei gegenüberliegende Flächen der leitenden Verbindungselemente jeweils mit einer der beiden aufgeteilten Gruppen von freiliegenden Substratteilen kontaktiert,
(4) Platzieren von Paaren von Widerstandsschweißelektroden gegen die Kollektorelemente, die an den beiden äußersten Flächen der beiden aufgeteilten Gruppen von freiliegenden Substratteilen angeordnet sind, und
(5) Durchführen von Widerstandsschweißen mit Anlegen von Schiebedruck zwischen den Paaren von Widerstandsschweißelektroden.

11. Verfahren der Herstellung einer abgedichteten Batterie nach Anspruch 10, wobei das Zwischenelement mit einem Loch oder einem Ausschnitt oder beidem versehen ist.

12. Verfahren der Herstellung einer abgedichteten Batterie nach Anspruch 10, wobei das Zwischenelement auf zumindest einem Paar von gegenüberliegenden Seiten des Zwischenelementes mit Ausschnitten versehen ist, die parallel zu einer Einfügungsrichtung des Zwischenelementes angeordnet sind,
im Schritt (3), während des Klammerns der Ausschnitte parallel zur Einfügungsrichtung des Zwischenelementes, das auf einem der Paare von gegenüberliegenden Seiten des Zwischenelementes vorgesehen ist, mit einer Positionierklammer, wobei das Zwischenelement zwischen den beiden aufgeteilten Gruppen der freiliegenden Substratteile angeordnet ist, und
wobei die Schritte (4) und (5) durchgeführt werden während die Ausschnitte parallel zur Einfügungsrichtung des Zwischenelementes gehalten werden, die in einem Paar von gegenüberliegenden Seiten des Zwischenelementes vorgesehen sind, mit einer Positionierklammer.

13. Verfahren der Herstellung einer abgedichteten Batterie nach einem der Ansprüche 10 bis 12, wobei das Zwischenelement abgeschrägte abgewinkelte Teile aufweist.

14. Verfahren der Herstellung einer abgedichteten Batterie nach einem der Ansprüche 10 bis 13, wobei die leitenden Verbindungselemente blockförmig oder säulenkörperförmige Einheiten sind, deren Enden über das Zwischenelement vorstehen.

15. Verfahren der Herstellung einer abgedichteten Batterie nach Anspruch 14, wobei die leitenden Verbindungselemente gegenseitig parallele ebene Teile aufweisen, die auf zwei gegenüberliegenden Flächen am Vorderende des Blocks oder am Säulenkörper vorgesehen sind und abgeschrägte gewinkelte Teile aufweisen.

16. Verfahren der Herstellung einer abgedichteten Batterie nach Anspruch 15, wobei die abgeschrägten Teile der leitenden Verbindungselemente eben sind.

17. Verfahren der Herstellung einer abgedichteten Batterie nach einem der Ansprüche 10 bis 16, wobei Vorsprünge auf zwei gegenüberliegenden Flächen der leitenden Verbindungselemente vorgesehen sind.

18. Verfahren der Herstellung einer abgedichteten Batterie nach Anspruch 17, wobei Öffnungen in Vorsprüngen ausgebildet sind, die auf zwei gegenüberliegenden Flächen der leitenden Verbindungselemente vorgesehen sind.

19. Verfahren der Herstellung einer abgedichteten Batterie nach einem der Ansprüche 10 bis 16, wobei Öffnungen in zwei gegenüberliegenden Flächen der leitenden Verbindungselemente vorgesehen sind.

20. Verfahren der Herstellung einer abgedichteten Batterie nach Anspruch 18 oder 19, wobei die Öffnungen vollständig durch die leitenden Verbindungselemente dringen.

21. Verfahren der Herstellung einer abgedichteten Batterie nach einem der Ansprüche 18 bis 20, wobei im Schritt (5) der Schiebedruck derart angelegt wird, dass die Öffnungen teilweise zerstört werden.

22. Verfahren der Herstellung einer abgedichteten Batterie nach einem der Ansprüche 10 bis 21, wobei ein ringförmiges Isolierdichtmaterial auf zwei gegenüberliegenden Flächen der leitenden Verbindungselemente angeordnet ist, um als das Zwischenelement zu dienen.

23. Verfahren der Herstellung einer abgedichteten Batterie nach einem der Ansprüche 10 bis 22, wobei die Form der freiliegenden Teile der leitenden Verbindungselemente zwischen den freiliegenden positiven Elektrodensubstratteilen sich von der zwischen den freiliegenden negativen Elektrodensubstratteilen unterscheidet.

## Revendications

1. Batterie secondaire prismatique scellée comprenant :
un ensemble d'électrodes qui comporte des parties exposées de substrat d'électrode positive et des parties exposées de substrat d'électrode négative empilées ou enroulées ;
un élément collecteur qui est joint électriquement aux parties exposées de substrat d'électrode positive ; et
un élément collecteur qui est joint électriquement aux parties exposées de substrat d'électrode négative,
les parties exposées de substrat d'électrode positive ou les parties exposées de substrat d'électrode négative, ou les deux, étant divisées en deux groupes, et entre eux est disposé un élément intermédiaire qui est constitué d'un matériau résineux et qui maintient une pluralité d'éléments conducteurs de connexion,
l'élément collecteur pour les parties exposées de substrat qui sont divisées en deux groupes étant disposé sur au moins l'une des surfaces les plus à l'extérieur des deux groupes divisés de parties exposées de substrat, et étant joint électriquement par un procédé de soudage par résistance aux deux groupes divisés de parties exposées de substrat, avec la pluralité d'éléments conducteurs de connexion de l'élément intermédiaire.

2. Batterie secondaire prismatique scellée selon la revendication 1, dans laquelle l'élément intermédiaire est pourvu d'un trou ou d'une découpe, ou des deux.

3. Batterie secondaire prismatique scellée selon la revendication 2, dans laquelle l'élément intermédiaire est pourvu, au moins sur une paire de côtés opposés, de découpes parallèles à une direction d'insertion de l'élément intermédiaire.

4. Batterie secondaire prismatique scellée selon la revendication 3, dans laquelle les découpes sont prévues sur des surfaces qui ne sont pas face aux parties exposées de substrat d'électrode positive ou aux parties exposées de substrat d'électrode négative.

5. Batterie secondaire prismatique scellée selon l'une quelconque des revendications 1 à 4, dans laquelle les parties inclinées de l'élément intermédiaire sont chanfreinées.

6. Batterie secondaire prismatique scellée selon l'une quelconque des revendications 1 à 5, dans laquelle la partie en matériau résineux de l'élément intermédiaire font saillie, dans la direction d'extension des parties exposées de substrat qui sont divisées en deux groupes, au-delà des extrémités des parties exposées de substrat qui sont divisées en deux groupes et des extrémité de l'élément collecteur vers le boîtier extérieur prismatique.

7. Batterie secondaire prismatique scellée selon l'une quelconque des revendications 1 à 6, dans laquelle les éléments conducteurs de connexion sont en forme de blocs ou en forme de corps en colonne.

8. Batterie secondaire prismatique scellée selon la revendication 7, dans laquelle les parties inclinées de deux surfaces mutuellement opposées des formes de blocs ou des formes de corps en colonne sont chanfreinées.

9. Batterie secondaire prismatique scellée selon la revendication 8, dans laquelle les surfaces chanfreinées sont planes.

10. Procédé de fabrication d'une batterie scellée, le procédé comprenant :
(1) la fabrication, en empilant ou en enroulant des plaques d'électrode positive et des plaques d'électrode négative en interposant un séparateur entre elles, un ensemble d'électrodes aplati avec une pluralité de parties exposées de substrat d'électrode positive empilées formées à une extrémité et une pluralité de parties exposées de substrat d'électrode négative empilées formées à l'autre extrémité ;
(2) la division des parties exposées de substrat d'électrode positive, ou des parties exposées de substrat d'électrode négative, empilées, ou des deux, en deux groupes ;
(3) la disposition d'un élément collecteur sur les deux surfaces les plus à l'extérieur des deux groupes divisés de parties exposées de substrat, et la disposition d'un élément intermédiaire qui est constitué d'un matériau résineux et qui maintient une pluralité d'éléments conducteurs de connexion, entre les deux groupes divisés de parties exposées de substrat, d'une manière telle que deux faces opposées des éléments conducteurs de connexion soient en contact chacune avec l'un des deux groupes divisés de parties exposées de substrat ;
(4) le placement de paires d'électrodes de soudage par résistance contre les éléments collecteurs disposés sur les deux surfaces les plus à l'extérieur des deux groupes divisés de parties exposées de substrat ; et
(5) l'exécution du soudage par résistance tout en appliquant une pression de poussée entre les paires d'électrodes de soudage par résistance.

11. Procédé de fabrication d'une batterie scellée selon la revendication 10, dans lequel l'élément intermédiaire est pourvu d'un trou ou d'une découpe, ou des deux.

12. Procédé de fabrication d'une batterie scellée selon la revendication 10, dans lequel l'élément intermédiaire est pourvu, sur au moins une paire de côtés opposés de l'élément intermédiaire, de découpes parallèles à une direction d'insertion de l'élément intermédiaire,
à l'étape (3), tout en serrant les découpes parallèles à la direction d'insertion de l'élément intermédiaire prévues sur une paire de côtés opposés de l'élément intermédiaire avec un montage de positionnement, l'élément intermédiaire est positionné entre les deux groupes divisés de parties exposées de substrat, et
les étapes (4) et (5) sont effectuées tout en serrant les découpes parallèles à la direction d'insertion de l'élément intermédiaire prévues sur une paire de côtés opposés de l'élément intermédiaire avec un montage de positionnement.

13. Procédé de fabrication d'une batterie scellée selon l'une quelconque des revendications 10 à 12, dans lequel l'élément intermédiaire comporte des parties inclinées chanfreinées.

14. Procédé de fabrication d'une batterie scellée selon l'une quelconque des revendications 10 à 13, dans lequel les éléments conducteurs de connexion sont des éléments en forme de blocs ou en forme de corps en colonne dont les extrémités font saillie de l'élément intermédiaire.

15. Procédé de fabrication d'une batterie scellée selon la revendication 14, dans lequel les éléments conducteurs de connexion comportent des parties planes mutuellement parallèles prévues sur deux surfaces opposées à l'avant du bloc ou du corps en colonne et comportent des parties inclinées chanfreinées.

16. Procédé de fabrication d'une batterie scellée selon la revendication 15, dans lequel les parties chanfreinées des éléments conducteurs de connexion sont planes.

17. Procédé de fabrication d'une batterie scellée selon l'une quelconque des revendications 10 à 16, dans lequel des protubérances sont formées sur deux surfaces opposées des éléments conducteurs de connexion.

18. Procédé de fabrication d'une batterie scellée selon la revendication 17, dans lequel des ouvertures sont formées dans les protubérances prévues sur deux surfaces opposées des éléments conducteurs de connexion.

19. Procédé de fabrication d'une batterie scellée selon l'une quelconque des revendications 10 à 16, dans lequel des ouvertures sont formées sur deux surfaces opposées des éléments conducteurs de connexion.

20. Procédé de fabrication d'une batterie scellée selon la revendication 18 ou 19, dans lequel les ouvertures pénètrent entièrement à travers les éléments conducteurs de connexion.

21. Procédé de fabrication d'une batterie scellée selon l'une quelconque des revendications 18 à 20, dans lequel, à ladite étape (5), la pression de poussée est appliquée d'une manière telle que les ouvertures sont à moitié écrasées.

22. Procédé de fabrication d'une batterie scellée selon l'une quelconque des revendications 10 à 21, dans lequel un matériau d'étanchéité isolant de forme annulaire est disposé sur deux surfaces opposées des éléments conducteurs de connexion pour servir en tant qu'élément intermédiaire.

23. Procédé de fabrication d'une batterie scellée selon l'une quelconque des revendications 10 à 22, dans lequel la forme des parties exposées des éléments conducteurs de connexion entre les parties exposées de substrat d'électrode positive diffère de la forme de celles entre les parties exposées de substrat d'électrode négative.
